(19) Europäisches Patentamt
European Patent Office
Office européen des brevets

(11) **EP 3 940 829 A1**

(12) **EUROPEAN PATENT APPLICATION**
published in accordance with Art. 153(4) EPC

(43) Date of publication:
**19.01.2022 Bulletin 2022/03**

(21) Application number: **20770077.4**

(22) Date of filing: **06.03.2020**

(51) International Patent Classification (IPC):
**H01M 4/96** (2006.01)    **C01B 32/00** (2017.01)
**H01M 8/18** (2006.01)

(52) Cooperative Patent Classification (CPC):
**C01B 32/00; H01M 4/96; H01M 8/18; Y02E 60/50**

(86) International application number:
**PCT/JP2020/009753**

(87) International publication number:
**WO 2020/184449 (17.09.2020 Gazette 2020/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.03.2019   JP 2019045662**

(71) Applicants:
• **TOYOBO CO., LTD.**
  **Osaka-shi**
  **Osaka 530-8230 (JP)**
• **SUMITOMO ELECTRIC INDUSTRIES, LTD.**
  **Osaka-shi, Osaka 541-0041 (JP)**

(72) Inventors:
• **IWAHARA, Ryouhei**
  **Otsu-shi, Shiga 520-0292 (JP)**

• **KOBAYASHI, Masaru**
  **Osaka-shi, Osaka 530-8230 (JP)**
• **MATSUMURA, Takahiro**
  **Otsu-shi, Shiga 520-0292 (JP)**
• **MORIMOTO, Kana**
  **Otsu-shi, Shiga 520-0292 (JP)**
• **OYA, Masayuki**
  **Osaka-shi, Osaka 541-0041 (JP)**
• **DONG, Yongrong**
  **Osaka-shi, Osaka 541-0041 (JP)**
• **ITOU, Kenichi**
  **Osaka-shi, Osaka 541-0041 (JP)**
• **IKEGAMI, Takahiro**
  **Osaka-shi, Osaka 541-0041 (JP)**

(74) Representative: **Vossius & Partner
Patentanwälte Rechtsanwälte mbB
Siebertstraße 3
81675 München (DE)**

(54) **CARBON ELECTRODE MATERIAL FOR REDOX FLOW BATTERY AND REDOX FLOW BATTERY PROVIDED WITH SAME**

(57)    To provide a carbon electrode material which is capable of decreasing cell resistance during initial charging and discharging while improving oxidation resistance to Mn ions. A carbon electrode material for a redox flow battery, including carbon fibers (A), graphite particles (B), and a carbon material (C) for binding the carbon fibers (A) and the graphite particles (B), the carbon electrode material satisfying (1) Lc(C), (2) Lc(C)/Lc(A), (3) an average curvature of the carbon fibers (A), and (4) a number of oxygen atoms bound to a surface of the carbon electrode material.

EP 3 940 829 A1

**Description**

TECHNICAL FIELD

The present invention relates to a carbon electrode material for use in a redox flow battery, and more specifically to a carbon electrode material that has excellent oxidation resistance and low resistance and that allows the entirety of a redox flow battery to have excellent energy efficiency.

BACKGROUND ART

A redox flow battery is a battery that utilizes oxidation-reduction in an aqueous solution of redox flow ions, and is a high-capacity storage battery having very high safety because of its mild reaction in only a liquid phase.

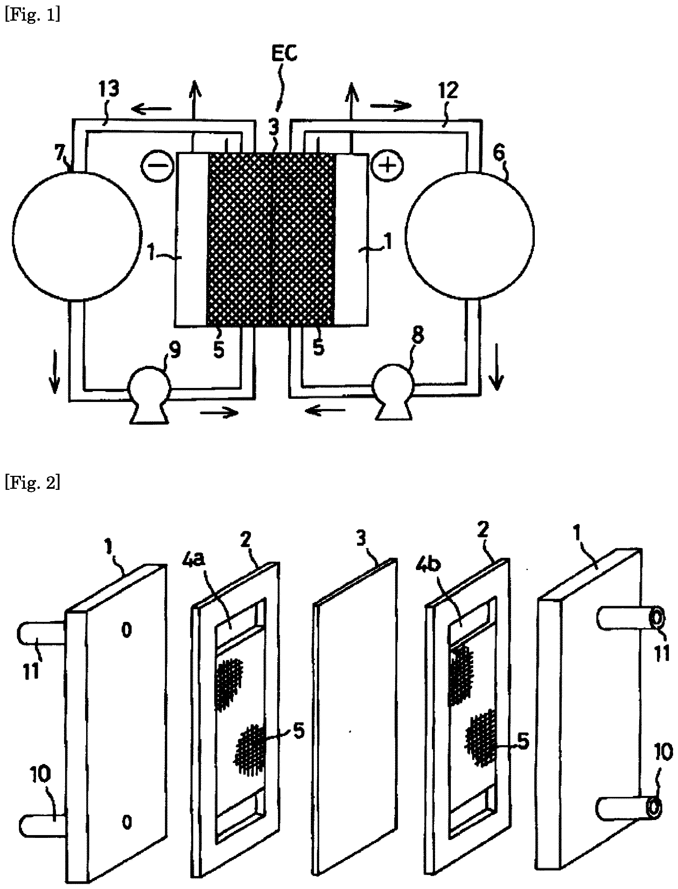

As shown in FIG. 1, a redox flow battery mainly includes outer tanks 6 and 7 for storing electrolytes (positive electrode electrolyte, negative electrode electrolyte), and an electrolytic cell EC. In the electrolytic cell EC, an ion-exchange membrane 3 is disposed between current collecting plates 1, 1 opposing each other. In the redox flow battery, while electrolytes containing active materials are being fed from the outer tanks 6 and 7 to the electrolytic cell EC by pumps 8 and 9, electrochemical energy conversion, that is, charging and discharging, is performed on electrodes 5 incorporated in the electrolytic cell EC. A carbon material that has chemical resistance, electrical conductivity, and liquid permeability is used for the material of the electrode 5.

As an electrolyte used for a redox flow battery, an aqueous solution that contains metal ions whose valence is changed by oxidation-reduction is typically used. The type of electrolyte has been changed from a type in which a hydrochloric acid aqueous solution of iron is used for a positive electrode and a hydrochloric acid aqueous solution of chromium is used for a negative electrode, to a type in which a sulfuric acid aqueous solution of vanadium having high electromotive force is used for both electrodes, thereby increasing the energy density.

In the case of a redox flow battery in which an acidic sulfuric acid aqueous solution of vanadium oxysulfate is used for a positive electrode electrolyte, and an acidic sulfuric acid aqueous solution of vanadium sulfate is used for a negative electrode electrolyte, an electrolyte containing $V^{2+}$ is supplied to a liquid flow path on the negative electrode side, and an electrolyte containing $V^{5+}$ (ion containing oxygen in practice) is supplied to a liquid flow path on the positive electrode side, during discharging. In the liquid flow path on the negative electrode side, $V^{2+}$ emits an electron in a three-dimensional electrode to be oxidized to $V^{3+}$. The emitted electron passes through an external circuit and reduces $V^{5+}$ to $V^{4+}$ (ion containing oxygen in practice) in a three-dimensional electrode on the positive electrode side. According to the oxidation-reduction reaction, $SO_4^{2-}$ becomes insufficient in the negative electrode electrolyte, and $SO_4^{2-}$ becomes excessive in the positive electrode electrolyte, so that $SO_4^{2-}$ transfers from the positive electrode side to the negative electrode side through the ion-exchange membrane to maintain charge balance. Alternatively, also by transfer of $H^+$ from the negative electrode side to the positive electrode side through the ion-exchange membrane, the charge balance can be maintained. During charging, a reaction reverse to that during discharging progresses.

An electrode material for a redox flow battery is particularly required to have the following performances.

1) Side reactions other than the target reaction do not occur (reaction selectivity is high), specifically, current efficiency ($\eta_I$) is high.
2) Electrode reaction activity is high, specifically, cell resistance (R) is low. That is, voltage efficiency ($\eta v$) is high.
3) Battery energy efficiency ($\eta_E$) related to the above-described 1) and 2) is high.

$$\eta_E = \eta_I \times \eta_V$$

4) Degradation is small for repeated use (long lifespan), specifically, the amount of reduction in the battery energy efficiency ($\eta_E$) is small.

For example, Patent Literature 1 discloses a carbon material having a specific pseudo-graphite microcrystal structure with high crystallinity as an electrode material for Fe-Cr batteries that is capable of increasing the total energy efficiency of a battery. Specifically, Patent Literature 1 discloses a carbon material that has pseudo-graphite microcrystals having an average <002> interplanar spacing, determined by wide-angle X-ray analysis, of 3.70 Å or smaller and an average crystallite size in the c-axis direction of 9.0 Å or larger and that has a total acidic functional group amount of at least 0.01 meq/g.

As an electrode for electric field layers in iron-chromium-based redox flow batteries and the like that increases the energy efficiency of a battery and improves the charging and discharging cycle life, Patent Literature 2 discloses a carbon electrode material that is carbon fibers made from polyacrylonitrile-based fibers and is composed of a carbon having a pseudo-graphite crystal structure having a <002> interplanar spacing, determined by wide-angle X-ray analysis, of 3.50 to 3.60 Å and in which the number of oxygen atoms bound to the surface of the carbon is 10 to 25% of the number of carbon atoms thereon.

As a carbon electrode material for vanadium-based redox flow batteries that allows the entirety of a battery system to have excellent energy efficiency and has little change in performance due to long-term use, Patent Literature 3 discloses an electrode that has a pseudo-graphite crystal structure having a <002> interplanar spacing, determined by wide-angle X-ray analysis, of 3.43 to 3.60 Å, a crystallite size in the c-axis direction of 15 to 33 Å, and a crystallite size in the a-axis direction of 30 to 75 Å, and in which the amount of acidic functional groups on the surface determined by XPS surface analysis is 0.2 to 1.0% of the total number of surface carbon atoms, and the number of surface-bound nitrogen atoms is not larger than 3% of the total number of surface carbon atoms.

Also, as a carbon electrode material that increases the overall efficiency of a vanadium-based redox flow battery and makes the cell resistance lower during initial charging, Patent Literature 4 discloses an electrode material that is composed of a carbon composite material in which carbon particulates having a crystal structure having a <002> interplanar spacing, determined by wide-angle Xray analysis, of 3.43 to 3.70 Å and an average primary particle diameter of not smaller than 30 nm and not larger than 5 $\mu$m are attached on carbon fibers, and the crystal structure of the carbon composite material has a <002> interplanar spacing, determined by wide-angle X-ray analysis, of 3.43 to 3.60 Å, a crystallite size in the c-axis direction of 15 to 35 Å, and a crystallite size in the a-axis direction of 30 to 75 Å. Patent Literature 4 indicates that, in the carbon composite material, the carbon fibers and the carbon particulates are preferably in close proximity or adhered to each other by an adhesive such as a phenol resin, and, when the adhesive is used, only the portions where the carbon fibers are originally in contact with each other can be fixed without excessively reducing the carbon fiber surfaces that are electrochemical reaction fields. In EXAMLES, Patent Literature 4 discloses a carbon fiber non-woven fabric obtained by immersing a non-woven fabric in a solution in which 5% by weight (Example 1) of carbon particulates (phenol resin) or 5% by weight (Examples 2 to 4) of a phenol resin is mixed, and then performing carbonization and dry oxidation.

The development of electrolytes for use in redox flow batteries has been progressing since then. For example, an electrolyte (for example, Mn-Ti-based electrolyte) in which manganese is used for a positive electrode, and chromium, vanadium, and/or titanium is used for a negative electrode, as in Patent Literature 5, is proposed as an electrolyte that has a higher electromotive force than the above-described vanadium-based electrolyte and that is stably available at low cost.

CITATION LIST

PATENT LITERATURE

[PTL 1] Japanese Laid-Open Patent Publication No. S60-232669
[PTL 2] Japanese Laid-Open Patent Publication No. H5-234612
[PTL 3] Japanese Laid-Open Patent Publication No. 2000-357520
[PTL 4] Japanese Laid-Open Patent Publication No. 2017-33758
[PTL 5] Japanese Laid-Open Patent Publication No. 2012-204135

SUMMARY OF THE INVENTION

PROBLEMS TO BE SOLVED BY THE INVENTION

However, it has been found that, when the electrode material for use in a vanadium-based electrolyte as in Patent Literature 2 to 4 is used as an electrode carbon material for a redox flow battery in which the Mn-Ti-based electrolyte described in Patent Literature 5 is used (hereinafter, sometimes abbreviated as Mn-Ti-based redox flow battery), the cell resistance is significantly increased during initial charging, resulting in a reduction in battery energy efficiency.

As shown in the disproportionation reaction below, Mn ions are unstable in an aqueous solution, and the reaction rate is slow, so that the cell resistance is increased. In addition, it has also been found that the electrode material deteriorates since the oxidizing power of Mn ions (positive electrode charging liquid) generated during charging is very strong. In particular, the oxidation resistance to Mn ions is a characteristic required strongly for Mn-Ti-based redox flow batteries, and it has been found that the above problems cannot be sufficiently addressed by merely using the electrode materials for redox flow batteries described in Patent Literatures 2 to 4 described above, and it is difficult to achieve both high oxidation resistance and low resistance.

$$2Mn^{3+} + 2H_2O \leftrightarrow Mn^{2+} + MnO_2 + 4H^-$$

The present invention has been made in view of the above circumstances, and an object of the present invention is to provide a carbon electrode material, for a redox flow battery, which is capable of decreasing cell resistance during initial charging and discharging while improving oxidation resistance to Mn ions (positive electrode charging liquid), particularly even when an Mn-Ti-based electrolyte is used, thereby improving battery energy efficiency.

SOLUTION TO THE PROBLEMS

The present inventors have conducted studies in order to solve the above problems. As a result, the present inventors have found that the desired purpose can be achieved when graphite particles (B) are used as carbon particles, and carbon fibers (A) and a carbon material (C), which satisfy the following requirements, and a structure of the carbon fibers (A) are used, and have completed the present invention.
The configuration of a redox flow battery for a carbon electrode material according to the present invention that can solve the above problems is as follows.
1. A carbon electrode material for a redox flow battery, comprising carbon fibers (A), graphite particles (B), and a carbon material (C) for binding the carbon fibers (A) and the graphite particles (B), the carbon electrode material satisfying the following requirements:

(1) Lc(C) is not less than 10 nm when Lc(C) represents a crystallite size, in a c-axis direction, obtained by X-ray diffraction in the carbon material (C);
(2) Lc(C)/Lc(A) is not less than 1.0 when Lc(A) represents a crystallite size, in the c-axis direction, obtained by X-ray diffraction in the carbon fibers (A);
(3) an average curvature is not less than 1R and an average fiber diameter is 5 to 15 $\mu$m in a structure of the carbon fibers (A); and
(4) a number of oxygen atoms bound to a surface of the carbon electrode material is not less than 1.0% of a total number of carbon atoms on the surface of the carbon electrode material.

2. The carbon electrode material according to the above 1, wherein, when a surface area obtained by a mercury press-in method is measured, a surface area A having a pore diameter of 0.1 to 10 $\mu$m is 0.3 to 3.5 $m^2$/g, and a ratio of the surface area A to a total surface area is not less than 50%.
3. The carbon electrode material according to the above 1 or 2, wherein each of mass content ratios of the graphite particles (B) and the carbon material (C) to a total content of the carbon fibers (A), the graphite particles (B), and the carbon material (C) is not less than 20%, and a mass ratio of the carbon material (C) to the graphite particles (B) is 0.2 to 3.0.
4. The carbon electrode material according to any one of the above 1 to 3, wherein the Lc(A) is 1 to 10 nm.
5. The carbon electrode material according to any one of the above 1 to 4, wherein a BET specific surface area obtained from a nitrogen adsorption amount is 1.0 to 8 $m^2$/g.
6. The carbon electrode material according to any one of the above 1 to 5, wherein the graphite particles (B) include at least one type selected from the group consisting of scaly graphite, laminate graphite, spheroidal graphite, and expanded graphite.
7. The carbon electrode material according to any one of the above 1 to 6, wherein a water flow rate is not less than 0.5 mm/sec when a water droplet is dropped.
8. A redox flow battery comprising the carbon electrode material according to any one of the above 1 to 7.
9. A manganese/titanium-based redox flow battery in which the carbon electrode material according to any one of the above 1 to 7 is used.

ADVANTAGEOUS EFFECTS OF THE INVENTION

The carbon electrode material of the present invention can achieve both high oxidation resistance and low resistance, and thus is particularly useful as an electrode material for a Mn-Ti-based redox flow battery. In particular, according to the present invention, even if the weight of a charging electrolyte is significantly reduced and oxidative deterioration occurs during use of the electrode material, a resistance value that is substantially equal to the initial resistance value can be maintained, so that an electrode material having very excellent oxidation resistance can be provided.

Such a carbon electrode material of the present invention is preferably used for flow-type and non-flow type batteries or a redox flow battery composited with lithium, a capacitor, and a fuel-cell system.

BRIEF DESCRIPTION OF THE DRAWINGS

[FIG. 1] FIG. 1 is a schematic diagram of a redox flow battery.
[FIG. 2] FIG. 2 is an exploded perspective view of a liquid-circulation type electrolytic cell that is preferably used in the present invention and has a three-dimensional electrode.
[FIG. 3] FIG. 3 is an SEM photograph (magnification: 100 times) of No. 1 (example of the present invention using a spunlace) in Table 2A in Example 2 described later.
[FIG. 4] FIG. 4 is an SEM photograph (magnification: 100 times) of No. 15 (comparative example using a spunlace) in Table 2A in Example 2 described later.
[FIG. 5] FIG. 5 is an SEM photograph (magnification: 100 times) of No. 10 (comparative example using carbon paper) in Table 2A in Example 2 described later.

DESCRIPTION OF EMBODIMENTS

The present inventors have diligently studied to particularly provide a carbon electrode material that is preferably used for Mn-Ti-based redox flow batteries in which Mn ions are used as a positive electrode active material and Ti ions are used as a negative electrode active material. Unlike the conventional V-based redox flow batteries and Fe-Cr-based redox flow batteries, it is important for a Mn-Ti-based redox flow battery to have oxidation resistance to Mn ions, but this point has not been taken into consideration for the electrode materials proposed so far. Therefore, as a result of the studies by the present inventors, it has been found that it is difficult to achieve both oxidation resistance and low resistance when the conventional electrode materials are used for a Mn-Ti-based redox flow battery.

To provide the above carbon electrode material, the present inventors have first reviewed the requirements for reactive particles. In general, examples of particles exhibiting reaction activity in a redox flow battery include known carbon particles including: carbon blacks such as acetylene black (acetylene soot), oil black (furnace black, oil soot), and gas black (gas soot); and carbon particles such as graphitized soot, carbon fiber powder, carbon nanotubes (CNT), carbon nanofibers, carbon aerogel, mesoporous carbon, glassy carbon powder, activated carbon, graphene, graphene oxide, N-doped CNT, boron-doped CNT, fullerenes, petroleum coke, acetylene coke, and anthracite coke. Of these carbon particles, carbon particles, such as carbon blacks, which have high reactivity and specific surface area and low crystallinity, are easily oxidized by a positive electrode charging liquid of manganese and cannot be used. On the other hand, when carbon particles, such as CNT, which merely have high carbon crystallinity are merely used, sufficient reaction activity cannot be exhibited. Furthermore, these carbon particles are rare and expensive, and thus are not suitable as inexpensive electrode materials.

Therefore, the present inventors have adopted graphite particles as the reactive particles.

Furthermore, as a carbon material (C), the present inventors have decided to adopt a carbon material that has binding properties for binding both carbon fibers (A) and graphite particles (B) and that has high crystallinity and satisfies the following requirements (1) and (2).

(1) Lc(C) is not less than 10 nm when Lc(C) represents a crystallite size, in a c-axis direction, obtained by X-ray diffraction.
(2) Lc(C)/Lc(A) is not less than 1.0 when Lc(A) represents a crystallite size, in the c-axis direction, obtained by X-ray diffraction in the carbon fibers.

Here, "binding both carbon fibers (A) and graphite particles (B)" (in other words, the carbon material used in the present invention acts as a binding agent for binding the carbon fibers and the graphite particles) means that the carbon material firmly binds the surfaces and insides of the carbon fibers and the graphite particles (including binding between the carbon fibers, and binding graphite particles to each other) to each other, and the surfaces of the graphite particles are exposed while the carbon fibers are covered with the carbon material as a whole of the electrode material.

However, it is preferable that the carbon material that has bound the carbon fibers and the carbon particles is not in a coating state. Here, "not in a coating state" means that the carbon material (C) does not form a webbed form such as a totipalmate form or a palmate form between the carbon fibers (A). This is because, in the case where the coating state is formed, the liquid permeability for an electrolyte deteriorates and the reaction surface area of the graphite particles cannot be effectively utilized.

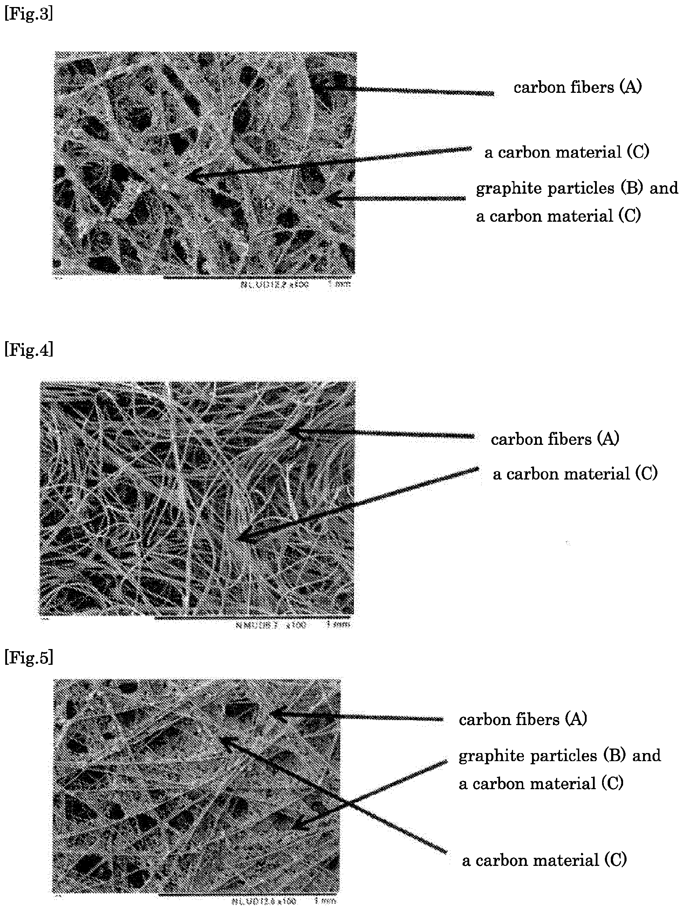

For reference, FIG. 3 shows an SEM photograph showing a state where both the carbon fibers (A) and the graphite particles (B) are bound. FIG. 3 is an SEM photograph (magnification: 100 times) of No. 1 (example of the present invention using a spunlace that satisfies the requirements of the present invention) in Table 2A in Example 2 described later. From FIG. 3, it is found that the surfaces and insides of the carbon fibers (A) and the graphite particles (B) are firmly bound by the carbon material (C), and the surfaces of the graphite particles (B) are exposed while the carbon fibers (A) are covered with the carbon material (C).

Meanwhile, FIG. 4 and FIG. 5 are each an SEM photograph showing a state where both the carbon fibers (A) and the graphite particles (B) are not bound in the electrode material of the present invention. FIG. 4 is an SEM photograph (magnification: 100 times) of No. 15 (comparative example using a spunlace that does not satisfy the requirements of the electrode material of the present invention) in Table 2A in Example 2 described later. FIG. 5 is an SEM photograph (magnification: 100 times) of No. 10 (comparative example using carbon paper that does not satisfy the requirements of the present invention) in Table 2A in Example 2 described later.

In order to obtain such a bound state, the content ratio of the carbon material (C) to the total content of the carbon fibers (A), the graphite particles (B), and the carbon material (C) is preferably increased, and is set to be, for example, not less than 20% by mass in the present invention. In this respect, the carbon material (C) used in the present invention is different from the carbon material described in Patent Literature 4 described above. This is because, in Patent Literature 4, based on the idea that it is sufficient that only the part where carbon fibers and carbon particulates are originally in contact with each other is fixed (adhered), there is only recognition that it is sufficient that the carbon material to be used acts as a partial adhesive. Therefore, the content ratio of the carbon material is 14.4% by mass at most in Examples of Patent Literature 4.

It has been found that, when the carbon material (C) having such binding properties is used, the carbon material (C) strongly binds the carbon fibers (A) via the graphite particles (B), so that an efficient conductive path can be formed, and the action due to the addition of the graphite particles (B) described above is more effectively exerted, whereby both low resistance and high oxidation resistance can be achieved.

Furthermore, it has been found that, when the carbon material (C) which has high crystallinity and which satisfies the above (1) and (2) is used, high oxidation resistance is imparted to the carbon material itself, and the effect of protecting the carbon fibers (A) against oxidative deterioration is also enhanced. In Patent Literature 4 described above, since the above (1) is not taken into consideration at all, it is considered that the desired oxidation resistance cannot be obtained.

Furthermore, the structure of the carbon fibers (A) used in the present invention satisfies an average curvature of not less than 1R and an average fiber diameter of 5 to 15 $\mu$m. In particular, it is important that the structure satisfies a curvature of not less than 1R. Accordingly, the oxidation resistance of the electrode material can be further increased (details will be described later).

Furthermore, the carbon electrode material of the present invention satisfies the following requirement (4).

(4) The number of oxygen atoms bound to the surface of the carbon electrode material is not less than 1.0% of the total number of carbon atoms on the surface of the carbon electrode material.

Accordingly, oxygen atoms can be introduced into edge surfaces or defective structural portions of carbon. As a result, reactive groups such as a carbonyl group, a quinone group, a lactone group, and a free-radical oxide are generated from the introduced oxygen atoms on the surface of the electrode material. Therefore, these reactive groups make a large contribution to electrode reaction, thereby achieving sufficiently low resistance.

Since the electrode material of the present invention is configured as described above, very high oxidation resistance can be achieved, and the reaction activity is also increased, so that an electrode having low resistance and long-life is obtained. In particular, when the electrode material of the present invention is used as an electrode material for an electrolytic cell of a positive electrode manganese-based redox flow battery, it is possible to decrease the cell resistance during initial charging and discharging and improve the battery energy efficiency, so that it is possible to provide a carbon electrode material having excellent oxidation resistance to a positive electrode charging liquid.

The present invention will be described below in detail for each component with reference to FIG. 2.

FIG. 2 is an exploded perspective view of a liquid-circulation type electrolytic cell that is preferably used in the present invention. In the electrolytic cell shown in FIG. 2, an ion-exchange membrane 3 is disposed between two current collecting plates 1, 1 opposing each other, and liquid flow paths 4a and 4b for an electrolyte are formed by spacers 2 on both sides of the ion-exchange membrane 3 along the inner surfaces of the current collecting plates 1, 1. An electrode material 5 is disposed in at least one of the liquid flow paths 4a and 4b. A liquid inflow port 10 and a liquid outflow port 11 for an electrolyte are disposed at each current collecting plate 1. When a structure, in which an electrode is formed by the electrode material 5 and the current collecting plate 1 as shown in FIG. 2 and the electrolyte passes in the electrode material 5, is formed (electrode structure is threedimensionally formed), the entire pore surface of the electrode material 5 can be used as an electrochemical reaction field to improve charging and discharging efficiency while transfer of electrons is ensured by the current collecting plate 1. As a result, the charging and discharging efficiency of the electrolytic cell is improved.

As described above, the electrode material 5 of the present invention is an electrode material in which the carbon fibers (A) act as a base material and the graphite particles (B) are carried by the high-crystalline carbon material (C), and the above-described requirements (1) to (4) are satisfied. The details of the requirements are as follows.

[Carbon Fibers (A)]

The carbon fibers used in the present invention mean fibers that are obtained by heating and carbonizing a precursor of organic fibers (details will be described later) and in which 90% or more in terms of mass ratio is composed of carbon (JIS L 0204-2). As the precursor of the organic fibers which is the raw material of the carbon fibers, acrylic fibers such as polyacrylonitrile; phenol fibers; PBO fibers such as polyparaphenylene benzobisoxazole (PBO); aromatic polyamide fibers; pitch fibers such as isotropic pitch fibers, anisotropic pitch fibers, and mesophase pitch; cellulose fibers; and the like can be used. Among them, as the precursor of the organic fibers, acrylic fibers, phenol fibers, cellulose fibers, isotropic pitch fibers, and anisotropic pitch fibers are preferable, and acrylic fibers are more preferable, from the viewpoint of having excellent oxidation resistance, excellent strength and elasticity, etc. The acrylic fibers are not particularly limited as long as the fibers contain acrylonitrile as a main component, but the content of acrylonitrile in the raw material monomer forming the acrylic fibers is preferably not less than 95% by mass and more preferably not less than 98% by mass.

The mass average molecular weight of the organic fibers is, but is not particularly limited to, preferably not less than 10000 and not larger than 100000, more preferably not less than 15000 and not larger than 80000, and further preferably not less than 20000 and not larger than 50000. The mass average molecular weight can be measured by a method such as gel permeation chromatography (GPC) or a solution viscosity method.

The average fiber diameter of the carbon fibers is preferably 0.5 to 40 $\mu$m. If the average fiber diameter is smaller than 0.5 $\mu$m, the liquid permeability deteriorates. On the other than, if the average fiber diameter is larger than 40 $\mu$m, the three-dimensional structure becomes excessively coarse, resulting in an increase in cell resistance. The average fiber diameter is more preferably 3 to 20 $\mu$m in consideration of the balance between the liquid permeability and the three-dimensional structure.

Moreover, the average fiber length of the carbon fibers is preferably 30 to 100 mm. If the average fiber length is shorter than 30 mm, the entanglement of the fibers is insufficient, so that there is a problem that a structure form cannot be maintained at the time of oxidative deterioration, for example. On the other hand, if the average fiber length is longer than 100 mm, it becomes difficult for the fibers to be defibrated, so that there is a problem that the uniformity is impaired, for example. The average fiber length is more preferably 40 to 80 mm.

In the present invention, a structure of the above carbon fibers (hereinafter, sometimes referred to as a fiber structure) is used as a base material. The use of the fiber structure improves the strength and facilitates handling and processability.

Furthermore, the fiber structure satisfies an average curvature of not less than 1R and an average fiber diameter of 5 to 15 $\mu$m. In the present invention, it is particularly important to use a fiber structure having an average curvature of not less than 1R, and an electrode material containing the above fiber structure has significantly improved oxidation resistance even under a severe oxidative deterioration environment, as compared with an electrode material containing a structure that does not satisfy the above requirements. Specifically, as a result of the studies by the present inventors, the following has been found for the first time. Even if the weight of the charging liquid is significantly reduced to about half of the original weight and oxidative deterioration occurs during use of the electrode material, the structure form can be maintained by the three-dimensional structure, so that a resistance substantially equal to the initial resistance value can be maintained, and fewer particles fall off at the time of oxidative deterioration, whereby an electrode material having very excellent oxidation resistance can be provided (see the cells for "overall cell resistance" at "oxidation resistance test" in Table 2 shown below). On the other hand, in the case of a fiber structure that does not satisfy the above conditions, if the weight is significantly reduced to about half of the original weight, the structure form cannot be maintained. Therefore, the space maintained by the structure form disappears, the liquid flowability in the cell significantly deteriorates, and the battery performance significantly deteriorates.

Here, "curvature R" is an index indicating the degree of bending of the carbon fibers, and is indicated as the reciprocal of a curvature radius r (R = 1/r, the unit of r is mm). The larger the curvature R (that is, the smaller the curvature radius r), the higher the degree of bending. In the present invention, when the surface of the carbon electrode material was observed with a scanning electron microscope (SEM), the degree of bending of the bent fibers (curved fibers) observed in the visual field was approximated to a circle to calculate the curvature R. The detailed measurement method will be described in detail in Examples.

When the above curvature is increased, the oxidation resistance tends to improve, and the cell resistance also tends to decrease. From the above viewpoint, the average curvature is preferably larger, and is preferably not less than 5R, and more preferably not less than 10R. However, in consideration of defibration of fibers, etc., in general, the average curvature is preferably not larger than 200R.

Here, the above "fiber structure having an average curvature of not less than 1R" means that most of the fibers forming the fiber structure are curved or curled. Alternatively, the above "fiber structure having an average curvature R of not less than 1" can also be said to be a three-dimensional structure in which the fibers exist in the thickness direction when a cross-section in the thickness direction (cross-section perpendicular to the fiber length direction) of the fiber structure is observed with a scanning electron microscope. On the other hand, in papers such as carbon paper, linear fibers are connected to each other, and when such a paper is observed with a microscope by the same method as described above, the average curvature R is zero, and the requirements of the present invention are not satisfied. In addition, the above papers are also different from the fiber structure used in the present invention, in that the papers are two-dimensional structures in which fibers do not exist in the thickness direction but exist only in the fiber length direction.

Specific examples of the fiber structure that satisfies the above requirements include spun yarns, bundled filament yarns, non-woven fabrics, knitted fabrics, and woven fabrics, special knitted/woven fabrics described in, for example, Japanese Laid-Open Patent Publication No. S63-200467, spunlace, Mali fleece, and felt which are sheet-like objects made of carbon fibers. Among them, non-woven fabrics, felt, knitted fabrics, woven fabrics, and special woven/knitted fabrics which are made of carbon fibers are more preferable from the viewpoint of handleability, processability, productivity, etc. Non-woven fabrics are more preferable.

Here, non-woven fabrics are defined in JIS L 0222, and examples thereof include spunbond non-woven fabrics, spunlace non-woven fabrics, needlepunched non-woven fabrics, resin-bonded non-woven fabrics, and thermal-bonded non-woven fabrics, depending on the difference in manufacturing methods such as entanglement, fusion, and bonding.

The average fiber diameter of the fiber structure is 5 to 15 $\mu$m. If the average fiber diameter is smaller than the above lower limit, the strength of the structure form is decreased. On the other hand, if the average fiber diameter is larger than the above upper limit, the uniformity of the structure form is impaired. The average fiber diameter of the structure is preferably 7 to 10 $\mu$m.

As described above, the carbon fibers are obtained by heating and carbonizing the precursor of the organic fibers. The "heating and carbonizing" preferably includes at least a flameproofing step and a carbonizing (calcining) step. However, among them, the carbonizing step does not necessarily have to be performed after the flameproofing step as described above. The carbonizing step may be performed after flameproofed fibers are impregnated with the graphite particles and the carbon material as in EXAMPLES described later. In this case, the carbonizing step after the flameproofing step can be omitted.

The above flameproofing step means a step of heating the precursor of the organic fibers under an air atmosphere preferably at a temperature of not lower than 180°C and not higher than 350°C to obtain flameproofed organic fibers. The heating temperature is more preferably not lower than 190°C and further preferably not lower than 200°C. The heating temperature is preferably not higher than 330°C and more preferably not higher than 300°C. When the heating is performed within the above temperature range, the organic fibers are not thermally decomposed, and the content ratios of nitrogen and hydrogen in the organic fibers can be reduced while the organic fibers are maintained in the form of the carbon fibers, to improve the carbonization rate. In the flameproofing step, the organic fibers may be thermally contracted, and the molecular orientation thereof may be broken, to reduce the electrical conductivity of the carbon fibers. Therefore, the organic fibers are preferably flameproofed under a strained or drawn state, and more preferably flameproofed under a strained state.

The carbonizing step means a step of heating the flameproofed organic fibers obtained as described above, under an inert atmosphere (preferably, under a nitrogen atmosphere) preferably at a temperature of not lower than 1000°C and not higher than 2000°C to obtain the carbon fibers. The heating temperature is more preferably not lower than 1100°C and further preferably not lower than 1200°C. The heating temperature is more preferably not higher than 1900°C. When the carbonizing step is performed within the above temperature range, the carbonization of the organic fiber progresses to obtain the carbon fibers having a pseudo-graphite crystal structure.

Organic fibers have crystallinities different from each other. Therefore, the heating temperature in the carbonizing step can be selected according to the type of the organic fibers as a raw material. For example, in the case where an acrylic resin (preferably, polyacrylonitrile) is used as the organic fibers, the heating temperature is preferably not lower than 800°C and not higher than 2000°C, and more preferably not lower than 1000°C and not higher than 1800°C.

The above flameproofing step and carbonizing step are preferably continuously performed. A temperature rising rate is preferably not larger than 20°C/minute and more preferably not larger than 15°C/minute when the temperature rises from the flameproofing temperature to the carbonizing temperature. When the temperature rising rate is within the above range, the carbon fibers that maintain the shape of the organic fibers and have excellent mechanical properties can be obtained. The lower limit of the temperature rising rate is preferably not less than 5°C/minute in consideration of the mechanical properties and the like.

As will be described in detail later for the carbon material (C), the electrode material of the present invention satisfies a condition that Lc(C)/Lc(A) is not less than 1.0 when Lc(A) and Lc(C) represent crystallite sizes, in the c-axis direction, obtained by X-ray diffraction in the carbon fibers (A) and the carbon material (C), respectively, as defined in the above-described (2). Therefore, in the present invention, Lc(A) in the carbon fibers (A) is not particularly limited as long as the above-described (2) is satisfied, but Lc(A) is preferably 1 to 15 nm and more preferably 1 to 10 nm. Accordingly, appropriate electron conductivity, oxidation resistance with respect to sulfuric acid solvent and the like, and an effect of facilitating addition of oxygen functional groups can be effectively exhibited. Lc(A) is further preferably 2 to 10 nm. A method for measuring Lc(A) will be described in detail later in Examples.

[Graphite particles (B)]

In the present invention, the graphite particles are necessary to increase the change in valence (reactivity) due to oxidation-reduction to achieve high oxidation resistance.

When Lc(B) represents the crystallite size, in the c-axis direction, obtained by X-ray diffraction, the graphite particles used in the present invention have Lc(B) of preferably not less than 35 nm and more preferably not less than 37 nm. Accordingly, a carbon edge surface serving as a reaction field can be exposed without excess or deficiency, so that it is possible to achieve both low resistance and high oxidation resistance. The upper limit of the above value is not particularly limited from the above viewpoint, but, in general, is preferably not larger than 50 nm in consideration of the balance between oxidation resistance and low resistance, etc.

Graphite particles are generally roughly classified into natural graphite and artificial graphite. Examples of natural graphite include scaly graphite, flaky graphite, earthy graphite, spheroidal graphite, and laminate graphite, and examples of artificial graphite include expanded graphite and graphite oxide. In the present invention, any of natural graphite and artificial graphite can be used, but among them, graphite oxide, scaly graphite, flaky graphite, earthy graphite, spheroidal graphite, laminate graphite, and expanded graphite are preferable since these graphites have a carbon edge surface as a reaction field. Among them, scaly graphite, laminate graphite, spheroidal graphite, and expanded graphite are more preferable since not only the carbon edge surface is exposed very greatly to achieve low resistance, but also the cost is low and the amount of resources is abundant. These scaly graphite, laminate graphite, spheroidal graphite, and expanded graphite may be added alone, or two or more of these graphites may be mixed and used. Here, scaly graphite means one having leaf-like appearance. Scaly graphite is different from flaky graphite (which is lumpy in shape and is sometimes referred to as lump graphite).

The particle diameter of the graphite particles (B) used in the present invention is preferably not less than 1 $\mu$m and more preferably not less than 3 $\mu$m. If the particle diameter is less than 1 $\mu$m, the ratio of the graphite particles buried in the carbon material is increased, and a small amount of the graphite particles appear on the surface of the carbon material, so that the specific surface area of the carbon material is excessively increased. As a result, the effect of improving oxidation resistance by the addition of the graphite particles (B) is not effectively exhibited, and the oxidation resistance tends to decrease.

Here, the reason why the effect of improving oxidation resistance is not effectively exhibited when the specific surface area of the carbon material is increased is inferred as follows.

Normally, when the graphite particles are buried, it is expected that the resistance will increase due to trade-off, but the durability will also increase, but in reality, the resistance is high and the durability is low. It is inferred that the effect by the addition of the graphite particles is not effectively exhibited due to the burial of the graphite particles and the resistance is increased, and the carbon material (binder) covers the graphite particles, which leads to a higher specific surface area of the carbon material, resulting in a decrease in durability.

Here, the "particle diameter" means an average particle diameter (D50) as a median diameter at 50% in a particle diameter distribution obtained by a dynamic light scattering method or the like. As the graphite particles, a commercially available product may be used. In this case, the particle diameter shown in the catalog can be adopted.

The graphite particles used in the present invention are contained in a content of preferably not less than 20% and more preferably not less than 25% as a mass ratio to the total content of the carbon fibers (A) and graphite particles (B), which are described above, and the carbon material (C) described below. Accordingly, the above effect by the addition of the graphite particles is effectively exhibited, and in particular, the oxidation resistance is improved. The upper limit of the content is not particularly limited from the viewpoint of oxidation resistance, etc., but, in general, is not larger than 60% in consideration of the balance between oxidation resistance and low resistance, etc. The content of the carbon fibers (A) used for calculating the above content is the content of a structure such as a non-woven fabric in the case where the structure is used as the base material.

In the present invention, the mass ratio of the carbon material (C) described below to the graphite particles (B) is preferably not less than 0.2 and not larger than 3.0, and more preferably not less than 0.3 and not larger than 2.5. If the above ratio is less than 0.2, more graphite particles fall off, so that, in particular, the effect of improving oxidation resistance by the addition of the graphite is not effectively exhibited. On the other hand, if the above ratio is larger than 3.0, the carbon edge surfaces of the graphite particles, which are reaction fields, are covered, so that desired low resistance is not achieved.

The BET specific surface area, of the graphite particles (B) used in the present invention, obtained from a nitrogen adsorption amount is preferably 3 to 20 m²/g and more preferably 5 to 15 m²/g. If the BET specific surface area is less than 3 m$^2$/g, the exposure of the edge surfaces of the graphite particles (B) is reduced, so that the desired low resistance is not achieved. On the other hand, if the BET specific surface area is equal to or larger than 20 m$^2$/g, the specific surface area is excessively increased, so that the effect of improving oxidation resistance by the addition of the graphite particles (B) is not effectively exhibited, and the oxidation resistance tends to decrease. Here, the "BET specific surface area obtained from a nitrogen adsorption amount" means a specific surface area calculated from the amount of gas molecules adsorbing when gas molecules are caused to adsorb to solid particles.

[Carbon material (C)]

The carbon material used in the present invention is added as a binding agent (binder) for firmly binding carbon fibers and graphite particles, which cannot be intrinsically bound to each other, and has an effect of protecting carbon fibers which are inferior in oxidation resistance. In the present invention, Lc(C) needs to satisfy not less than 10 nm when Lc(C) represents the crystallite size, in the c-axis direction, obtained by X-ray diffraction in the carbon material (C) as defined in the above (1), and Lc(C)/Lc(A) needs to satisfy not less than 1.0 when Lc(A) represents the crystallite size, in the c-axis direction, obtained by X-ray diffraction in the carbon fibers (A) as defined in the above (2).

When the carbon material that has binding properties and satisfies all of these requirements is used, oxidation resistance is imparted to the carbon material (C) itself, and the carbon fibers are also covered with the high-crystalline carbon material (C), so that the effect of protecting the carbon fibers against oxidative deterioration is also enhanced. As a result, the oxidation resistance of the entire electrode material is also improved.

From the above viewpoint, Lc(C) is preferably not less than 10 nm and more preferably not less than 12 nm. The upper limit of Lc(C) is not particularly limited from the above viewpoint, but, in general, is preferably not larger than 40 nm in consideration of achievement of both oxidation resistance and low resistance, etc.

Moreover, if the ratio Lc(C)/Lc(A) is less than 1.0, the above effect is not effectively exhibited. The above ratio is preferably not less than 2 and more preferably not less than 3. On the other hand, if the above ratio is larger than 10, it is difficult to achieve low resistance. The above ratio is preferably not larger than 8.

The carbon material (C) used in the present invention is contained in a content of preferably not less than 20% and more preferably not less than 30% as a mass ratio to the total content of the carbon fibers (A) and graphite particles (B), which are described above, and the carbon material (C). When the content ratio of the carbon material is increased as described above, both the carbon fibers and the graphite particles can be sufficiently bound, so that the effect by the addition of the carbon material is effectively exhibited, and in particular, the oxidation resistance is improved. The upper limit of the content is not particularly limited from the viewpoint of oxidation resistance, etc., but, in general, is preferably not larger than 60% in consideration of liquid flow pressure loss, etc. The upper limit of the content is more preferably not larger than 50%.

The type of the carbon material (C) used in the present invention may be any type when the carbon fibers (A) and the graphite particles (B) can be bound. Specifically, the type of the carbon material (C) is not particularly limited as long as binding properties are exhibited during carbonizing when the electrode material of the present invention is produced. Examples of such a carbon material include: pitches such as coal-tar pitch and coal-based pitch; resins such as phenol resin, benzoxazine resin, epoxide resin, furan resin, vinylester resin, melamineformaldehyde resin, urea-formaldehyde resin, resorcinol-formaldehyde resin, cyanate ester resin, bismaleimide resin, polyurethane resin, and polyacrylonitrile; furfuryl alcohol; and rubber such as acrylonitrile-butadiene rubber. These may be commercially available products.

Among them, particularly, pitches such as coal-tar pitch and coal-based pitch which are easily crystallizable are preferable since the target carbon material (C) can be obtained at a low calcining temperature. Polyacrylonitrile resin is also preferably used since the target carbon material (C) can be obtained when the calcining temperature is increased. Pitches are particularly preferable.

According to a preferable aspect of the present invention, since a phenol resin is not used, a harmful effect (generation of formaldehyde and formaldehyde odor at room temperature) caused by the phenol resin is not exerted, so that, for example, generation of odor at room temperature is advantageously prevented. On the other hand, in Patent Literature 4, a phenol resin is used as an adhesive. Therefore, in addition to the above-described harmful effect being exerted, for example, equipment for controlling the concentration of formaldehyde at a working site such that the concentration of formaldehyde is not higher than a control concentration needs to be additionally provided, and this is disadvantageous from the viewpoint of cost and workability.

Here, pitches that are particularly preferably used will be described in detail. As for the above-described coal-tar pitch and coal-based pitch, the content ratio of a mesophase (liquid crystal phase) can be controlled by an infusibilizing temperature and time. If the content of the mesophase is small, a pitch in a melted state is obtained at a relatively low temperature or a pitch in a liquid state is obtained at room temperature. On the other hand, if the content ratio of the metaphase is large, the pitch is melted at a high temperature, resulting in a high carbonization yield. In the case where pitches are used as the carbon material (C), the content ratio of the mesophase is preferably larger (that is, carbonization rate is higher), and is, for example, preferably not less than 30% and more preferably not less than 50%. Accordingly, fluidity at the time of melting is reduced, and the carbon fibers can be bound to each other through the graphite particles without excessively covering the surfaces of the graphite particles. The upper limit of the content ratio is, for example, preferably not larger than 90% in consideration of exhibition of binding properties, etc.

From the same viewpoint as described above, the melting point of the pitch is preferably not lower than 100°C and more preferably not lower than 200°C. Accordingly, in addition to the above effect being obtained, odor in the impregnating process can be reduced, so that such a melting point is also preferable from the viewpoint of processability. The upper limit of the melting point is, for example, preferably not higher than 350°C in consideration of exhibition of binding properties, etc.

(Characteristics of electrode material of the present invention)

The electrode material of the present invention satisfies the condition that the number of oxygen atoms bound to the surface of the carbon electrode material is not less than 1.0% of the total number of carbon atoms on the surface of the carbon electrode material. Hereinafter, the ratio of the number of bound oxygen atoms to the total number of carbon atoms is sometimes abbreviated as O/C. The O/C can be measured by surface analysis such as X-ray photoelectron spectroscopy (XPS) or fluorescent X-ray analysis.

When the electrode material in which the O/C is not less than 1.0% is used, the electrode reaction velocity can be significantly increased, thereby achieving low resistance. Furthermore, the hydrophilicity can be enhanced by controlling the O/C, so that a water flow rate (preferably, not less than 0.5 mm/sec) of the electrode material as described later can be assured. On the other hand, if an electrode material having a low oxygen concentration in which the O/C is less than 1.0% is used, the electrode reaction rate at the time of discharging is decreased, so that the electrode reaction activity cannot be enhanced. As a result, the resistance is increased. Although the details of the reason why the electrode reaction activity (in other words, voltage efficiency) is enhanced by using the electrode material having a lot of oxygen atoms bound to the surface thereof as described above, are not clear, a lot of oxygen atoms on the surface are considered to effectively act on affinity between the carbon material (C) and the electrolyte, emission and reception of electrons, desorption of complex ions from the carbon material, complex exchange reaction, etc.

The electrode material of the present invention has excellent hydrophilicity. The hydrophilicity can be confirmed by a water flow rate when a water droplet is dropped after the electrode material is oxidized in a dry process. The water flow rate of the electrode material of the present invention is preferably not less than 0.5 mm/sec. Accordingly, the affinity for the electrolyte can be determined as being sufficient. The higher the water flow rate of the electrode material is, the better the electrode material is. The water flow rate is more preferably not less than 1 mm/sec, further preferably not less than 5 mm/sec, and further preferably not less than 10 mm/sec.

When the surface area of the electrode material of the present invention is measured by a mercury press-in method, a surface area A having a pore diameter of 0.1 to 10 $\mu$m preferably satisfies 0.3 to 3.5 m$^2$/g. According to the results of the studies by the present inventors, it has been found that the surface area A having a pore diameter in the above range has a high correlation with the effect of decreasing resistance at a state of charge of 30% in a low charging depth region where the active material is insufficient, and when the surface area A is increased, a good effect of decreasing resistance is exhibited in the low charging depth region (see the cells for overall cell resistance at SOC of 30% described later). When this point is described in detail, the reaction of the redox flow battery occurs only on the surface of the electrode with which the electrolyte comes into contact. Therefore, in the region where the pore diameter is smaller than the above range and is, for example, several nanometers or smaller, entry of the active material is blocked due to the influence of surface tension with the electrolyte, so that it is considered that the surface area in this region is unlikely to contribute to the reaction. On the other hand, it is considered that, in the region where the pore diameter is 0.1 to 10 $\mu$m, which is the target in the present invention, the electrolyte is efficiently brought into contact with the electrode surface portion, and particularly, the reaction in the low charging depth region where the active material is insufficient is smoothly carried out. If the pore diameter is less than 0.1 $\mu$m, the proportion, in the low charging depth region, which contributes to the reaction may be decreased. On the other hand, if the pore diameter is larger than 10 $\mu$m, the surface area in the same space tends to be insufficient, so that such a pore diameter is not preferable. The pore diameter is more preferably 0.1 to 5 $\mu$m.

Moreover, if the surface area A is less than 0.3 m$^2$/g, it is difficult to achieve the desired effect. The larger the surface area A is, the greater the effect of decreasing resistance is. If the surface area A is larger than 3.5 m$^2$/g, the durability tends to deteriorate. The surface area A is more preferably 0.5 to 3.3 m$^2$/g and further preferably 1.0 to 3.0 m$^2$/g.

Furthermore, the ratio of the surface area A to the total surface area is preferably not less than 50%. If the ratio is less than 50%, it is difficult to achieve the effect of decreasing resistance in the above-described low charging depth region, and the number of starting points of oxidative deterioration is increased, so that the durability deteriorates even if the performance is the same. The ratio is more preferably not less than 60%. The upper limit of the ratio is not particularly limited from the above viewpoint, but, in general, is preferably not larger than 80% in consideration of the occupied volume for achieving the above surface area, etc.

Examples of the method for obtaining the above surface area A include the following first to fourth methods.

The first method is a method of appropriately controlling the weight ratio of the graphite particles (B) to the carbon material (C). By controlling the weight ratio such that the graphite particles (B) can be exposed on the surface, an uneven surface is naturally formed on the surface, and the predetermined surface area A is obtained. Specifically, the weight ratio of graphite particles (B)/carbon material (C) is preferably 3/1 to 1/3. If the weight ratio is less than 3/1, the binding properties by the carbon material (C) are insufficient, and falling-off of powder is increased, so that such a ratio is not preferable. On the other hand, if the weight ratio is larger than 1/3, it becomes difficult to obtain the desired surface area A. In order to obtain the desired surface area A, the average particle diameter of the graphite particles (B) is preferably 1 to 30 $\mu$m and more preferably 5 to 20 $\mu$m.

The second method is to increase the melting point of the carbon material (C) and control the particle diameter of the carbon material (C). According to this method, carbonization after the carbon material (C) is melted rapidly progresses, and fluidity of the carbon material (C) is suppressed, so that the predetermined surface area A is obtained without closing pores having a pore diameter of 0.1 to 10 $\mu$m, which is the target. Specifically, the melting point of the carbon material (C) is preferably not lower than 100°C and more preferably not lower than 200°C. Accordingly, in addition to the above effect being obtained, odor in the impregnating process can be reduced, so that such a melting point is also preferable from the viewpoint of processability. The upper limit of the melting point of the carbon material (C) is, for example, preferably not higher than 350°C in consideration of exhibition of binding properties, etc. Furthermore, in the case where such a carbon material (C) is used, the average particle diameter of the carbon material (C) is preferably controlled to 1 to 40 $\mu$m. If the average particle diameter of the carbon material (C) is less than 1 $\mu$m, the pores having a pore diameter of 0.1 to 10 $\mu$m, which is the target, may be closed. On the other hand, if the average particle diameter of the carbon material (C) is larger than 40 $\mu$m, the contact surface with the graphite particles (B) is reduced, so that the binding force is insufficient.

The third method is to infusibilize the carbon material (C). Specifically, when the carbon material (C) is heated at 200 to 350°C under an oxygen atmosphere, after the carbon material (C) is once melted, the condensation reaction of the carbon precursor in a green pitch coke progresses to infusibilize the carbon material (C). Accordingly, the fluidity when the carbon material (C) is melted is suppressed without impairing the binding properties with the graphite particles (B) or the binding properties with the carbon fibers (A), and the predetermined surface area A can be obtained without closing the pores having a pore diameter of 0.1 to 10 $\mu$m, which is the target. The heating temperature for the carbon material (C) is preferably not lower than 250°C and more preferably not lower than 300°C. In the above method, the carbon material (C) that has been infusibilized and ground in advance may be used.

The fourth method is a method of adding a material that almost disappears during carbonization. Accordingly, desired pores can be formed. Examples of the above material include cellulose, polyethylene, and polypropylene. As the above material, a material in a particle state having an average particle diameter of 5 to 30 $\mu$m or a fibrous material having an average fiber diameter of 10 to 20 $\mu$m is preferably used.

The weight per unit area of the electrode material of the present invention is preferably 50 to 500 g/m$^2$ and more preferably 100 to 400 g/m$^2$ in the case where the thickness (hereinafter, referred to as "spacer thickness") of the spacer 2 between the current collecting plate 1 and the ion-exchange membrane 3 is 0.3 to 3 mm. When the weight per unit area is controlled to be within the above range, damage to the ion-exchange membrane 3 can be prevented while the liquid permeability is ensured. Particularly, in recent years, the thickness of the ion-exchange membrane 3 tends to be decreased from the viewpoint of low resistance, and treatment and usage for reducing damage to the ion-exchange membrane 3 is very important. Furthermore, from the above viewpoint, as for the electrode material of the present invention, a non-woven fabric or paper having one face flattened is more preferably used as the base material. Any known flattening method can be applied. Examples of the flattening method include a method of applying a slurry to one face of the carbon fibers and drying the slurry thereon, and a method of impregnation and drying on a smooth film formed of PET or the like.

The thickness of the electrode material of the present invention is preferably at least larger than the spacer thickness. For example, in the case where a fabric such as a non-woven fabric having a low density is used as the carbon fibers, and the graphite particles and the carbon material having binding properties, which are used for the electrode material of the present invention, are carried in the fabric, the thickness of the electrode material is preferably 1.5 to 6.0 times the spacer thickness. In the case where the thickness is excessively large, the ion-exchange membrane 3 may be pierced due to compression stress of a sheetshaped object. Therefore, as the electrode material of the present invention, a material having a compression stress of not larger than 9.8 N/cm$^2$ is preferably used. For example, two or three layers of the electrode material of the present invention may be stacked and used in order to adjust the compression stress or the like according to the weight per unit area and/or the thickness of the electrode material of the present invention. Alternatively, another form of an electrode material may also be used in combination.

The BET specific surface area, of the electrode material of the present invention, obtained from a nitrogen adsorption amount is preferably 1.0 to 8 m$^2$/g and more preferably 1.5 to 6 m$^2$/g. If the BET specific surface area is less

than 1.0 m$^2$/g, the exposure of the edge surfaces of the graphite particles (B) is reduced, so that desired low resistance is not achieved. On the other hand, if the BET specific surface area is larger than 8 m$^2$/g, the specific surface area is excessively increased, so that the effect of improving oxidation resistance by the addition of the graphite particles (B) is not effectively exhibited, and the oxidation resistance tends to decrease.

(Method for producing electrode material of the present invention)

Next, a method for producing the electrode material of the present invention will be described. The electrode material of the present invention can be produced through a carbonizing step, a graphitization step, and an oxidization step after the carbon fibers (base material) are impregnated with the graphite particles and a precursor (before carbonized) of the carbon material. In each step, any known method can be applied.
Each step will be described below.

(Step of impregnating carbon fibers with graphite particles and precursor of carbon material)

First, the carbon fibers are impregnated with the graphite particles and the precursor of the carbon material. Any known method can be adopted for impregnating the carbon fibers with the graphite particles and the precursor of the carbon material. An example of such a method is a method of heating and melting the above carbon material precursor, dispersing the graphite particles in the obtained melt, immersing the carbon fibers in the melted dispersion liquid, and then cooling the carbon fibers to room temperature. Alternatively, a method of dispersing the above carbon material precursor and the graphite particles in a solvent such as an alcohol or water to which a binder (provisional adhesive) such as polyvinyl alcohol which disappears during carbonization is added, immersing the carbon fibers in the dispersion liquid, and then heating and drying the carbon fibers, as described later in Examples, can be used. The excess liquid of the above melted dispersion liquid or dispersion liquid in which the carbon fibers have been immersed can be removed by, for example, a method in which the excess dispersion liquid provided when the carbon fibers are immersed in the dispersion liquid is squeezed through nip rollers having a predetermined clearance, or a method in which the surface of the excess dispersion liquid provided when the carbon fibers are immersed in the dispersion liquid is scraped by a doctor blade or the like.
Thereafter, drying is performed under an air atmosphere at, for example, 80 to 150°C.

(Carbonizing step)

The carbonizing step is performed for calcining the product obtained by the impregnation in the above step. Accordingly, the carbon fibers are bound to each other through the graphite particles. In the carbonizing step, preferably, decomposed gas generated during carbonization is sufficiently removed. For example, heating is preferably performed at a temperature of not lower than 800°C and not higher than 2000°C under an inert atmosphere (preferably, under a nitrogen atmosphere). The heating temperature is preferably not lower than 1000°C, further preferably not lower than 1200°C, and even more preferably not lower than 1300°C, and is more preferably not higher than 1500°C and further preferably not higher than 1400°C.
As described above, although treatment corresponding to the carbonizing step may be performed after flameproofing the fibers, the carbonizing treatment after flameproofing the fibers may be omitted. That is, the method for producing the electrode material of the present invention is mainly classified into the following method 1 and method 2.

- Method 1: Flameproofing of the fibers → carbonization of the fibers → impregnation with the graphite particles and the carbon material → carbonization → graphitization → oxidization
- Method 2: Flameproofing of the fibers → impregnation with the graphite particles and the carbon material → carbonization → graphitization → oxidization

According to the method 1, carbonization is performed twice and the processing cost is thus increased. However, since a sheet used as the electrode material is unlikely to be influenced by a difference in a volume shrinkage rate, the obtained sheet is advantageously unlikely to be deformed (warped). Meanwhile, according to the method 2, the carbonizing step is performed only once and the processing cost can thus be reduced. However, the obtained sheet is likely to be deformed due to a difference in a volume shrinkage rate during carbonization of each material. Whether to adopt either of the above methods 1 and 2 may be determined as appropriate in consideration of these points.

(Graphitization step)

The graphitization step is performed in order to sufficiently increase the crystallinity of the carbon material and achieve high oxidation resistance. Furthermore, after the carbonizing step, heating is preferably performed under an inert atmosphere (preferably, under a nitrogen atmosphere) at a temperature that is not lower than 1800°C and higher than the heating temperature in the carbonizing step, and more preferably at a temperature of not lower than 2000°C. The upper limit of the temperature is preferably not higher than 3000°C in consideration of the load on the equipment, etc.

On the other hand, the method in Patent Literature 4 described above is different from the method for producing the electrode material according to the present invention, in that the graphitization step is not performed. Therefore, the electrode material in Patent Literature 4 does not satisfy the requirement [Lc of the carbon material (C) is not less than 10 nm] for the electrode material of the present invention.

(Oxidization step)

After the graphitization step, the oxidization step is further performed, whereby oxygen functional groups such as a hydroxyl group, a carbonyl group, a quinone group, a lactone group, and a free-radical oxide are introduced into the surface of the electrode material. As a result, the above-described ratio O/C $\geq$ 1% can be achieved. These oxygen functional groups make a large contribution to electrode reaction, thereby achieving sufficiently low resistance. Furthermore, the water flow rate for water can also be increased.

As the oxidization step, for example, various treatment steps such as wet chemical oxidization and electrolytic oxidization, and dry oxidization can be applied. From the viewpoint of processability and production cost, a dry oxidization step is preferable. A dry oxidization step means a step of heating (oxidizing), for example, at a temperature of not lower than 500°C and not higher than 900°C under an air atmosphere. In order to effectively exhibit the effect due to the introduction of the above oxygen functional groups, the heating temperature is more preferably not lower than 600°C and further preferably not lower than 650°C. Furthermore, the heating temperature is more preferably not higher than 800°C and further preferably not higher than 750°C.

Furthermore, in a dry oxidization step, from the viewpoint of maintaining the mechanical strength of the electrode material, the mass yield of the electrode material obtained from the masses before and after the oxidization is preferably adjusted to be not lower than 90% and not higher than 96%. This mass yield can be adjusted by, for example, a method of adjusting the treatment time or temperature in the dry air oxidization as appropriate.

This application claims priority to Japanese Patent Application No. 2019-045662 filed on March 13, 2019, the entire contents of which are incorporated herein by reference.

EXAMPLES

The present invention will be described in more detail below by means of examples and comparative examples. However, the present invention is not limited by the following examples. Hereinafter, % means "% by mass" unless otherwise specified.

In the examples, the following items were measured. The details of the measurement methods are as follows.

(1) Measurement of crystallite size (Lc) in c-axis direction by X-ray diffraction

Specifically, Lc(A) of the carbon fibers, Lc(B) of the graphite particles, and Lc(C) of the carbon material were measured as follows.

The carbon fibers, the graphite particles, and the carbon material (individual elements) used in the examples were sequentially subjected to the same heating process as in Example 2, and finally processed samples were used for the measurement. Basically, it is considered that the carbon crystallinity is influenced dominantly by thermal energy imparted to the sample, and the crystallinity of Lc is determined by a thermal history of the sample at the highest temperature. However, it is considered that a graphene laminate structure formed in the graphitization step may be broken depending on a degree of the succeeding oxidization, and the crystallinity may be reduced due to generation of a defective structure, etc. Therefore, the finally processed samples were used.

Each individual element sample obtained as described above was ground by using an agate mortar until the particle diameter became about 10 $\mu$m. About 5% by mass of X-ray standard high-purity silicon powder as an internal standard substance was mixed with the ground sample, and a sample cell was filled therewith, and a wide angle X-ray measurement was performed by diffractometry using CuK$\alpha$ rays as a ray source.

For the carbon fibers (A), the graphite particles (B), and the carbon material (C) for binding the carbon fibers (A) and the graphite particles (B), which were used for the electrode material of the present invention, peaks were separated from a chart obtained by the wide-angle X-ray measurement to calculate the respective Lc values. Specifically, a peak having a top in a range where twice (2$\theta$) a diffraction angle $\theta$ was 26.4° to 26.6° was set as the graphite particles (B), and a peak having a top in a range where twice (2$\theta$) the diffraction angle $\theta$ was 25.7° to 26.2° was set as the carbon material (C). A peak shape as a sine wave was determined from each peak top, and a peak shape as a sine wave was thereafter determined from a foot portion appearing near 24.0° to 25.0°, and set as the carbon fibers (A). When the peak tops of the graphite particles (B) and the carbon material (C) were not able to be separated from each other, both peak tops were separated from each other by determining a peak shape as a sine wave from a foot portion appearing near 24.0° to 26.0°. Lc of each of the carbon fibers (A), the graphite particles (B), and the carbon material (C) was calculated by the following method based on the three peaks separated by the above method.

For correction of a curve, the following simple method was used without performing correction related to so-called Lorentz factor, polarization factor, absorption factor, atomic scattering factor, and the like. Specifically, the substantial intensity from the baseline of a peak corresponding to <002> diffraction was re-plotted to obtain a <002> corrected intensity curve. The crystallite size Lc in the c-axis direction was obtained by the following equation from the length (half width β) of a line segment obtained by a line that was parallel to an angle axis and drawn at 1/2 of the peak height intersecting the corrected intensity curve.

$$Lc = (k \cdot \lambda)/(\beta \cdot \cos\theta)$$

Here, wavelength $\lambda$ = 1.5418 Å, structure factor k = 0.9, $\beta$ represents the half width of a <002> diffraction peak, and $\theta$ represents a <002> diffraction angle.

(2) Method for calculating average curvature R

The surface of the carbon electrode material was observed with a scanning electron microscope (SEM) at a magnification of 100 times. Among the bent fibers observed in the field of view, the part with the largest bending was selected, and this bent part was fitted with an arc. The radius of the arc was defined as a curvature radius r (measured in millimeter), and 1/r was calculated and defined as a curvature R. The same measurement was performed at 5 locations in total, and the average value of the measurements was calculated to obtain an average curvature R.

(3) Method for calculating average fiber diameter

A cross section of each fiber used was observed with a scanning electron microscope (1000 times), five fibers were arbitrarily extracted, and the cross-sectional areas thereof were measured. Each of these cross-sectional areas was regarded as a cross-sectional area of a fiber having a round cross-sectional shape, and a fiber diameter was calculated by the following equation. The average value of the fiber diameters of the five fibers in total was calculated and used as the average fiber diameter of the fiber structure.

$$\text{Fiber diameter } (\mu m) = \sqrt{(4 \times \text{cross-sectional area } (\mu m^2)/3.14)}$$

(4) Measurement of O/C by XPS surface analysis

A 5801MC device available from ULVAC-PHI, Inc., was used for measurement by X-ray photoelectron spectroscopy abbreviated as ESCA or XPS.

First, the sample was fixed onto a sample holder by a Mo plate, exhaustion was sufficiently performed in a preliminary exhaustion chamber, and the sample was thereafter put into a chamber in a measurement chamber. Monochromated AlKa rays were used as a ray source, output was set at 14 kV and 12 mA, and the degree of vacuum in the device was set to $10^{-8}$ torr.

Scanning for all elements was performed to examine the structures of the surface elements, and narrow scanning for detected elements and anticipated elements was performed to assess an existence ratio thereof.

The ratio of the number of oxygen atoms bound to the surface to the total number of carbon atoms on the surface was calculated as a percentage (%), to calculate O/C.

(5) Charging and discharging test

Each electrode material obtained in a method described below was cut out so as to have a 2.7 cm side in the up-down direction (liquid flowing direction), a 3.3 cm side in the width direction, and an electrode area of 8.91 cm$^2$, and was introduced only to the positive electrode side. At this time, the number of electrode materials was adjusted such that the weight per unit area within the cell was 230 to 350 g/m$^2$. Two electrode materials produced as described below were stacked on the negative electrode side to assemble the cell shown in FIG. 1. A Nafion 212 membrane was used for the ion-exchange membrane, and the spacer thickness was set to 0.5 mm. The overall cell resistance ($\Omega \cdot$cm$^2$) in the

following equations (1) and (2) was calculated from a voltage curve of the 10th cycle at 144 mA/cm$^2$ in a voltage range of 1.55 to 1.00 V.

For both electrolytes of the positive electrode and the negative electrode, 5.0 moL/L sulfuric acid aqueous solutions in which 1.0 moL/L of titanium oxysulfate and 1.0 moL/L of manganese oxysulfate, respectively, were dissolved, were used. The amount of the electrolyte was made excessively large for the cell and the tube. A liquid flow rate was 10 mL per minute, and the measurement was performed at 35°C.

$$\text{Overall cell resistance at SOC of 50\%} = (V_{C50}-V_{D50})/(2\times I)\ [\Omega \cdot cm^2] \quad (1)$$

where

$V_{C50}$ represents a charge voltage, obtained from an electrode curve, with respect to an electric quantity in the case of the state of charge being 50%.

$V_{D50}$ represents a discharge voltage, obtained from an electrode curve, with respect to an electric quantity in the case of the state of charge being 50%.

I = current density (mA/cm$^2$).

$$\text{Overall cell resistance at SOC of 30\%} = (V_{C30}-V_{D30})/(2\times I)\ [\Omega \cdot cm^2] \quad (2)$$

where

$V_{C30}$ represents a charge voltage, obtained from an electrode curve, with respect to an electric quantity in the case of the state of charge being 30%.

$V_{D30}$ represents a discharge voltage, obtained from an electrode curve, with respect to an electric quantity in the case of the state of charge being 30%.

I = current density (mA/cm$^2$).

<Method for producing electrode material for negative electrode>

A plain weave cloth (thickness: 1.0 mm, weight per unit area: 600 g/m$^2$) made of polyacrylonitrile fibers having an average fiber diameter of 16 $\mu$m was heated at 300°C under an air atmosphere to flameproof the cloth, and the cloth was calcined at 1000°C under a nitrogen atmosphere for 1 hour. Then, the cloth was heated at 600°C under an air atmosphere for 8 minutes, and then calcined at 1800°C under a nitrogen atmosphere for 1 hour. Furthermore, the cloth was treated at 700°C under an air atmosphere for 15 minutes, thereby obtaining an electrode material, for a negative electrode, having a weight per unit area of 152 g/m$^2$ and a thickness of 0.73 mm.

(6) Oxidation resistance test

(6-1) Oxidation resistance of carbon particles (including graphite particles)

For a battery with an electrolyte containing a 5.0 moL/L sulfuric acid aqueous solution of 1.0 moL/L of titanium oxysulfate and a 5.0 moL/L sulfuric acid aqueous solution of 1.0 moL/L manganese oxysulfate, using a platinum wire as a working electrode and an Ag/AgCl electrode as a reference electrode, charging was performed until the open circuit voltage reached 1.266 V. The carbon particles used in the example were immersed in an amount of the above electrolyte that was 40 times the amount of the carbon particles, and allowed to stand at 75°C for 16 hours. After allowing to cool to room temperature, the open circuit voltage of the electrolyte (platinum wire as the working electrode and Ag/AgCl as the reference electrode) was measured, and the oxidation resistance was estimated by the degree of voltage drop from 1.266V.

For the electrode material, two types of oxidation resistance were evaluated as described below. In an oxidation resistance test in Part 1, the rate of weight loss due to oxidative deterioration was estimated. Meanwhile, an oxidation resistance test in Part 2 evaluates that the resistance does not easily increase even if the weight loss due to oxidative deterioration progresses, and thus Part 2 can be said to be a more advanced test for evaluating oxidation resistance as compared with Part 1.

(6-2) Oxidation resistance of electrode material (Part 1, potential test)

At a potential with an electrolyte containing a 5.0 moL/L sulfuric acid aqueous solution of 1.0 moL/L of titanium oxysulfate and a 5.0 moL/L sulfuric acid aqueous solution of 1.0 moL/L manganese oxysulfate, using a platinum wire as a working electrode and an Ag/AgCl electrode as a reference electrode, charging was performed until the open circuit voltage reached 1.266 V. The produced electrode material was immersed in a charging liquid whose amount was 40 times the weight of the electrode, and allowed to stand at 75°C for 16 hours. After allowing to cool to room temperature, the open circuit voltage of the electrolyte (platinum wire as the working electrode and Ag/AgCl as the reference electrode) was measured, and the oxidation resistance was estimated by the degree of voltage drop from 1.266V.

(6-3) Oxidation resistance of electrode material (Part 2, overall cell resistance at SOC of 50%)

At a potential with an electrolyte containing a 5.0 moL/L sulfuric acid aqueous solution of 1.0 moL/L of titanium oxysulfate and a 5.0 moL/L sulfuric acid aqueous solution of 1.0 moL/L manganese oxysulfate, using a platinum wire as a working electrode and an Ag/AgCl electrode as a reference electrode, charging was performed until the open circuit voltage reached 1.266 V. The produced electrode material was immersed in a charging liquid whose amount was about 300 to 5000 times the weight of the electrode, at 75°C for 2 weeks to reduce the weight of the electrode material to 50%. Here, as compared with the above (6-2), the electrode material was immersed in an excessive amount of the charging liquid for a longer time. The weight-reduced electrode material was washed with the uncharged electrolyte, then washed with 2.5 M sulfuric acid, and washed with pure water until the washing liquid became neutral. The washed electrode material was dried at 120°C overnight, the overall cell resistance at SOC of 50% was then measured in the same manner as in the above (6), and the oxidation resistance was evaluated.

(7) Water flow test for water

One drop of ion-exchanged water was dropped onto an electrode from a 3 mmcφ pipette at a point that was 5 cm above the electrode, and the time until the dropped water droplet permeated was measured, and a water flow rate for water was calculated by the following equation.

$$\text{Water flow rate (mm/sec) for water} = \text{thickness (mm) of electrode material/time (sec) until water droplet permeated}$$

(8) Measurement of BET specific surface area (BET: $m^2/g$)

About 100 mg of a sample was collected and vacuum-dried at 120°C for 12 hours, 90 mg of the sample was weighed, and the BET specific surface area of the sample was measured using a specific surface area/pore distribution measuring device, Gemini 2375 (manufactured by Micromeritics Instrument Corporation). Specifically, the adsorption amount of nitrogen gas at the boiling point (-195.8°C) of liquid nitrogen was measured in a range of relative pressure of 0.02 to 0.95, and an adsorption isotherm of the sample was created. Based on the results in the range of relative pressure of 0.02 to 0.15, the BET specific surface area per weight (unit: $m^2/g$) was obtained by the BET method.

(9) Measurement of surface area by mercury press-in method

Measurement was performed under the following conditions using a pore distribution measuring device [AutoPore IV9520 (manufactured by SHIMADZU CORPORATION)].
A sample was cut into a strip of about 12.5 mm x 25 mm, about 0.04 to 0.15 g of the sample was taken in a 5 mL powder cell (stem volume: 0.4 mL), and measurement was performed under the condition of an initial pressure of about 3.7 kPa (about 0.5 psia, equivalent to a pore diameter of about 340 μm). The mercury parameters were set to a mercury contact angle of 130 degrees and mercury surface tension of 485 dynes/cm which are the device default, and the volume of pores having a pore diameter 0.1 to 10 μm was measured. From this value, a surface area A was calculated by using the surface area of a cylinder as a model

Example 1

In this example, using various carbon particles (A to F, A', a, b) shown in Table 1, the particle diameter and Lc(B) were measured, and the oxidation resistance test was performed to evaluate the oxidation resistance.

Of A to F, A to E are each graphite defined in the present invention, A, B, and C are each scaly graphite, D is laminate graphite, and E is spheroidal graphite. On the other hand, F is scaly graphite having a small Lc, and G is scaly graphite having a particle diameter of less than 1 µm and a small Lc. In addition, A' is graphite obtained by grinding A for 6 hours through bead milling with a LABSTAR Mini machine manufactured by Ashizawa Finetech Ltd., and is an example that has a small Lc. a and b are carbon blacks.

Commercially available products were used as all the carbon particles, and the particle diameters shown in Table 1 are the values shown in the catalog. The particle diameter of A' was measured by a laser diffraction method.

The results of these carbon particles are also shown in Table 1.

[Table 1]

| Types of carbon particles (B) | | Particle diameter (µm) | Lc(B) (nm) | Oxidation resistance test (V vs Ag/AgCl) |
|---|---|---|---|---|
| Symbol | Type | | | |
| A | Graphite | 9.00 | 35.1 | 1.216 |
| B | Graphite | 15.00 | 38.2 | 1.227 |
| C | Graphite | 19.00 | 36.1 | 1.221 |
| D | Graphite | 5.00 | 36.2 | 1.178 |
| E | Graphite | 8.00 | 38.2 | 1.226 |
| a | Carbon black | 0.04 | 1.3 | 0.622 |
| b | Carbon black | 0.05 | 1.9 | 0.556 |
| F | Graphite | 3.00 | 29.2 | 0.612 |
| A' | Graphite | 2.00 | 24.9 | 0.922 |
| G | Graphite | Less than 1 | 14.9 | 0.504 |

As shown in Table 1, all of A to E satisfying the graphite particle requirements (particle diameter: not less than 1 µm, Lc: not less than 35 nm) specified in the present invention had excellent oxidation resistance and exhibited high durability. It is considered that these are because excessive exposure of the edge surface, which may be a starting point of oxidative deterioration, can be suppressed.

On the other hand, in both a and b using carbon black instead of graphite, the oxidation resistance was significantly reduced. It is considered that this is because the amorphous carbon part is easily oxidatively deteriorated due to insufficient carbon crystallinity.

It was also found that even graphite particles having an Lc of less than 35 nm, such as F, G, and A', are also inferior in oxidation resistance. It is considered that this is because the carbon edge surface is excessively exposed.

Example 2

In this example, using some of the carbon particles in Table 1 and carbon fibers, structures of carbon fibers, and carbon materials shown in Table 2, electrode materials were produced as follows, and various items thereof were measured.

(No. 1)

In No.1, an electrode material was produced as follows, using a spunlace non-woven fabric made of flameproofed polyacrylonitrile fibers, as a structure of carbon fibers, C in Table 1 (example satisfying the requirements of present invention) as graphite particles, and a pitch, which is coal tar pitch MCP250 (melting point: 250°C, particle diameter: 10 µm) manufactured by JFE Chemical Corporation, as a carbon material.

First, 1.8% of RHEODOL TW-L120 (nonionic surfactant) manufactured by Kao Corporation, 1.8% of polyvinyl alcohol (provisional adhesive), 14% of MCP250 manufactured by JFE Chemical Corporation (carbon material), and 9.8% of C in Table 1 as graphite powder were added to ion-exchanged water and stirred with a mechanical stirrer for 1 hour to prepare a dispersion liquid.

A spunlace non-woven fabric made of polyacrylonitrile fibers (manufactured by SHINWA Corporation, weight per unit area: 100 g/m$^2$, average curvature: 40R, average fiber diameter: 20 µm, average fiber length: 80 mm, thickness: 0.81 mm) was immersed in the dispersion liquid thus obtained, and then passed through nip rollers to remove the excess dispersion liquid.

Next, the non-woven fabric was dried at 150°C under an air atmosphere for 20 minutes, then carbonized (calcined) at 1000°C under a nitrogen atmosphere for 1 hour, and further graphitized at 2000°C for 1 hour. After the graphitization, oxidation was performed at 700°C under an air atmosphere for 20 minutes, to obtain an electrode material (No. 1) having a thickness of 0.66 mm and a weight per unit area of 184.0 g/m$^2$. The average fiber diameter of the fiber structure in the above No. 1 was 10 $\mu$m due to shrinkage during carbonization (see Table 2).

(No.2)

An electrode material No.2 (a thickness of 0.44 mm, a weight per unit area of 104.0 g/m$^2$) was produced by the same manner as in No.1 except using A in Table 1 (example satisfying the requirements of present invention) as graphite particles; using a spunlace non-woven fabric made of flameproofed polyacrylonitrile fibers having a weight per unit area of 55 g/m$^2$. The average fiber diameter of the fiber structure in the above No.2 was 10 $\mu$m due to shrinkage during carbonization (see Table 2).

(No.3)

An electrode material No.3 (a thickness of 0.69 mm, a weight per unit area of 225.0 g/m$^2$) was produced by the same manner as in No.1 except using B in Table 1 (example satisfying the requirements of present invention) as graphite particles; changing a ratio of the amount of graphite particles and a carbon material to the total amount of carbon fibers, graphite particles, and a carbon material as shown in Table 2. The average fiber diameter of the fiber structure in the above No.3 was 10 $\mu$m due to shrinkage during carbonization (see Table 2).

(No.4)

An electrode material No.4 (a thickness of 0.75 mm, a weight per unit area of 199.0 g/m$^2$) was produced by the same manner as in No.1 except using E in Table 1 (example satisfying the requirements of present invention) as graphite particles; changing a ratio of the amount of graphite particles and a carbon material to the total amount of carbon fibers, graphite particles, and a carbon material as shown in Table 2. The average fiber diameter of the fiber structure in the above No.4 was 10 $\mu$m due to shrinkage during carbonization (see Table 2).

(No.5)

An electrode material No.5 (a thickness of 0.66 mm, a weight per unit area of 196.0 g/m$^2$) was produced by the same manner as in No.1 except using D in Table 1 (example satisfying the requirements of present invention) as graphite particles; adding 4.9% of above D to ion-exchanged water; changing a ratio of the amount of graphite particles and a carbon material to the total amount of carbon fibers, graphite particles, and a carbon material as shown in Table 2. The average fiber diameter of the fiber structure in the above No. 5 was 10 $\mu$m due to shrinkage during carbonization (see Table 2).

(No.6)

An electrode material No.6 (a thickness of 2.11 mm, a weight per unit area of 341.0 g/m$^2$) was produced by the same manner as in No.5 except using C in Table 1 (example satisfying the requirements of present invention) as graphite particles; changing a ratio of the amount of graphite particles and a carbon material to the total amount of carbon fibers, graphite particles, and a carbon material as shown in Table 2; using felt (weight per unit area: 150 g/m$^2$, average curvature: 20R, average fiber diameter: 20 $\mu$m, average fiber length: 70 mm, thickness: 2.52 mm) made of flameproofed polyacrylonitrile fibers as a structure of carbon fibers. The average fiber diameter of the fiber structure in the above No. 6 was 10 $\mu$m due to shrinkage during carbonization (see Table 2).

(No.7)

An electrode material No.7 (a thickness of 0.96 mm, a weight per unit area of 239.0 g/m$^2$) was produced by the same manner as in No.1 except using Mali fleece (weight per unit area: 100 g/m$^2$, average curvature: 33R, average fiber diameter: 20 $\mu$m, average fiber length: 80 mm, thickness: 1.21 mm) made of flameproofed polyacrylonitrile fibers as a structure of carbon fibers; using B in Table 1 (example satisfying the requirements of present invention) as graphite particles; changing a ratio of the amount of graphite particles and a carbon material to the total amount of carbon fibers, graphite particles, and a carbon material as shown in Table 2. The average fiber diameter of the fiber structure in the above No. 7 was 10 $\mu$m due to shrinkage during carbonization (see Table 2).

(No.8)

An electrode material No.8 (a thickness of 1.94 mm, a weight per unit area of 255.0 g/m$^2$) was produced by the same manner as in No.1 except using felt (weight per unit area: 100 g/m$^2$, average curvature: 5R, average fiber diameter: 18 $\mu$m, average fiber length: 50 mm, thickness: 2.13 mm) made of anisotropic pitch fibers as carbon fibers; changing a ratio of the amount of graphite particles and a carbon material to the total amount of carbon fibers, graphite particles, and a carbon material as shown in Table 2. The average fiber diameter of the fiber structure in the above No. 8 was 9 $\mu$m due to shrinkage during carbonization (see Table 2).

(No.9)

An electrode material No.9 (a thickness of 0.66 mm, a weight per unit area of 184.0 g/m$^2$) was produced by the same manner as in No.1 except using A in Table 1 (example satisfying the requirements of present invention) as graphite particles; adding 14.7% of above A to ion-exchanged water; changing a ratio of the amount of graphite particles and a carbon material to the total amount of carbon fibers, graphite particles, and a carbon material as shown in Table 2. The average fiber diameter of the fiber structure in the above No.9 was 10 $\mu$m due to shrinkage during carbonization (see Table 2).

(No.10)

In this example, Carbon paper (CFP-030-PE, manufactured by Nippon Polymer Sangyo CO., LTD., weight per unit area: 30 g/m$^2$, average curvature: 0, average fiber diameter: 7 $\mu$m, average fiber length: 6 mm, thickness: 0.51 mm) made of polyacrylonitrile fibers instead of using the spunlace non-woven fabric made of flameproofed polyacrylonitrile fibers used in above No.1.
In detail, an electrode material (Comparative Example) No.10 (a thickness of 0.50 mm, a weight per unit area of 121.0 g/m$^2$) was produced by the same manner as in No.1 except using graphite particles (A); changing a ratio of the amount of graphite particles and a carbon material to the total amount of carbon fibers, graphite particles, and a carbon material as shown in Table 2.

(No.11)

An electrode material (Comparative Example) No.11 (a thickness of 0.79 mm, a weight per unit area of 192.0 g/m$^2$) was produced by the same manner as in No.1 except using Carbon paper (manufactured by ORIBEST CO., LTD., weight per unit area: 60 g/m$^2$, average curvature: 0, average fiber diameter: 7 $\mu$m, average fiber length: 6 mm, thickness: 0.84 mm) made of polyacrylonitrile fibers; using B in Table 1 as graphite particles; changing a ratio of the amount of graphite particles and a carbon material to the total amount of carbon fibers, graphite particles, and a carbon material as shown in Table 2.

(No. 12)

An electrode material (Comparative Example) No.12 (a thickness of 0.77 mm, a weight per unit area of 162.0 g/m$^2$) was produced by the same manner as in No.10 except using D in table 1 as graphite particles, in No.11.

(No.13)

This example uses A in table 1 as graphite particles and phenol resin (TD-4304 manufactured by DIC Co., LTD.,) as a carbon material.
In detail, an electrode material (Comparative Example) No.13 (a thickness of 0.63 mm, a weight per unit area of 197.0 g/m$^2$) was produced by the same manner as in No.1 except adding 4.9% of graphite particles and 10% of aqueous dispersion of phenol resin to ion-exchanged water; changing a ratio of the amount of graphite particles and a carbon material to the total amount of carbon fibers, graphite particles, and a carbon material as shown in Table 2.

(No. 14)

No. 14 was Comparative Example simulating Patent Literature 3 and an electrode material was produced by treating carbon fibers without using graphite particles and a carbon material.

Specifically, a spunlace non-woven fabric (weight per unit area: 100 g/m², average curvature: 5R, average fiber diameter: 18 μm, average fiber length: 80 mm, thickness: 0.81 mm) made of flameproofed polyacrylonitrile fibers was carbonized (calcined) at 1000°C under a nitrogen atmosphere for 1 hour, and further graphitized at 1500°C for 1 hour. After the graphitization, oxidation was performed at 700°C for 15 minutes, to obtain an electrode material (Comparative Example) No.14 (a thickness of 0.78 mm, a weight per unit area of 50 g/m²). A temperature rising rate from flame resistance temperature to carbonization temperature is the same as No.1. The average fiber diameter of the fiber structure in the above No. 14 was 9 μm due to shrinkage during carbonization (see Table 2).

(No.15)

An electrode material No.15 (a thickness of 0.66 mm, a weight per unit area of 154 g/m²) made of the carbon fibers (A) and the carbon material (C) was produced by the same manner as in No.1 except using no graphite particles; using a spunlace non-woven fabric (weight per unit area: 50 g/m², average curvature: 40R, average fiber diameter: 20 μm, average fiber length: 80 mm, thickness: 0.81 mm) carbonized (calcined) at 1000°C.

(No. 16)

An electrode material (Comparative Example) No.16 (a thickness of 1.42 mm, a weight per unit area of 311.0 g/m²) was produced by the same manner as in No.1 except using felt (manufactured by GUN EI Chemical Industry CO., LTD., weight per unit area: 200 g/m², average curvature: 15R, average fiber diameter: 19 μm, thickness: 11 mm) made of Kynol (Trade mark) fibers. The average fiber diameter of the fiber structure in the above No. 15 was 9 μm due to shrinkage during carbonization (see Table 2).

(No.17)

An electrode material No.17 (a thickness of 0.66 mm, a weight per unit area of 184.0 g/m²) was produced by the same manner as in No.1 except using G (example unsatisfying the requirements of present invention) in table 1 as graphite particles. The average fiber diameter of the fiber structure in the above No. 1 7 was 10 μm due to shrinkage during carbonization (see Table 2).

Table 2 shows the measurement results of various items in above No. 1 to 17.

[Table 2A]

| No. | Types of carbon particles (B) | Carbon fibers (A) | | Structure of carbon fibers (A) | | | Carbon material (C) | | Lc (C) /Lc (A) |
|---|---|---|---|---|---|---|---|---|---|
| | | Type | Lc (A) (nm) | Average fiber diameter (μm) | Average curvature (R) | Type | Type | Lc (C) (nm) | |
| 1 | C | Polyacrylonitrile fibers | | 10 | 40 | Spunlace | Pitch | | |
| 2 | A | Polyacrylonitrile fibers | | 10 | 40 | Spunlace | Pitch | | |
| 3 | B | Polyacrylonitrile fibers | | 10 | 40 | Spunlace | Pitch | | |
| 4 | E | Polyacrylonitrile fibers | 2.9 | 10 | 40 | Spunlace | Pitch | 12 | 4.1 |
| 5 | D | Polyacrylonitrile fibers | | 10 | 40 | Spunlace | Pitch | | |
| 6 | C | Polyacrylonitrile fibers | | 10 | 20 | Felt | Pitch | | |
| 7 | B | Polyacrylonitrile fibers | | 10 | 33 | Mali fleece | Pitch | | |

(continued)

| No. | Types of carbon particles (B) | Carbon fibers (A) | | Structure of carbon fibers (A) | | | Carbon material (C) | | Lc (C) /Lc (A) |
|---|---|---|---|---|---|---|---|---|---|
| | | Type | Lc (A) (nm) | Average fiber diameter (μm) | Average curvature (R) | Type | Type | Lc (C) (nm) | |
| 8 | C | Anisotropic pitch fibers | 10 | 9 | 5 | Felt | Pitch | 12 | 1.2 |
| 9 | A | Polyacrylonitrile fibers | 2.9 | 10 | 40 | Spunlace | Pitch | 12 | 4.1 |
| 10 | A | Polyacrylonitrile fibers | 2.9 | 7 | 0 | Paper | Pitch | 12 | 4.1 |
| 11 | B | Polyacrylonitrile fibers | 2.9 | 7 | 0 | Paper | Pitch | 12 | 4.1 |
| 12 | D | Polyacrylonitrile fibers | 2.9 | 7 | 0 | Paper | Pitch | 12 | 4.1 |
| 13 | A | Polyacrylonitrile fibers | 2.9 | 10 | 40 | Spunlace | Phenol resin | 1.5 | 0.5 |
| 14 | - | Polyacrylonitrile fibers | 2.0 | 9 | 5 | Spunlace | None | - | - |
| 15 | - | Polyacrylonitrile fibers | 2.9 | 10 | 40 | Spunlace | Pitch | 12 | 4.1 |
| 16 | A | Kynol fibers | 1.5 | 9 | 15 | Felt | Phenol resin | 1.5 | 1.0 |
| 17 | G | Polyacrylonitrile fibers | 2.9 | 10 | 40 | Spunlace | Pitch | 12 | 4.1 |

[Table 2B]

| No. | (1) Weight per unit area of carbon fiber structure (g/m$^2$) | (2) Weight per unit area of carbon material (g/m$^2$) | (3) Weight per unit area of carbon particles (g/m$^2$) | Total weight per unit area (1)+(2)+(3) (g/m$^2$) | Content ratio of carbon particles (3)/((1)+(2)+(3)) (%) | Content ratio of carbon material ((2)/((1)+(2)+(3)) (%) | Mass ratio of carbon material to carbon particles (2)/(3) |
|---|---|---|---|---|---|---|---|
| 1 | 50 | 67.0 | 67.0 | 184.0 | 36.4 | 36.4 | 1.0 |
| 2 | 30 | 37.0 | 37.0 | 104.0 | 35.6 | 35.6 | 1.0 |
| 3 | 50 | 87.5 | 87.5 | 225.0 | 38.9 | 38.9 | 1.0 |
| 4 | 50 | 74.5 | 74.5 | 199.0 | 37.4 | 37.4 | 1.0 |
| 5 | 50 | 97.3 | 48.7 | 196.0 | 24.8 | 49.7 | 2.0 |
| 6 | 150 | 127.3 | 63.7 | 341.0 | 18.7 | 37.3 | 2.0 |
| 7 | 50 | 94.5 | 94.5 | 239.0 | 39.5 | 39.5 | 1.0 |
| 8 | 100 | 77.5 | 77.5 | 255.0 | 30.4 | 30.4 | 1.0 |
| 9 | 50 | 53.6 | 80.4 | 184.0 | 43.7 | 29.1 | 0.7 |
| 10 | 30 | 45.5 | 45.5 | 121.0 | 37.6 | 37.6 | 1.0 |

(continued)

| No. | (1) Weight per unit area of carbon fiber structure (g/m$^2$) | (2) Weight per unit area of carbon material (g/m$^2$) | (3) Weight per unit area of carbon particles (g/m$^2$) | Total weight per unit area (1)+(2)+(3) (g/m$^2$) | Content ratio of carbon particles (3)/((1)+(2)+(3)) (%) | Content ratio of carbon material ((2)/((1)+(2)+(3)) (%) | Mass ratio of carbon material to carbon particles (2)/(3) |
|---|---|---|---|---|---|---|---|
| 11 | 60 | 66.0 | 66.0 | 192.0 | 34.4 | 34.4 | 1.0 |
| 12 | 60 | 68.0 | 34.0 | 162.0 | 21.0 | 42.0 | 2.0 |
| 13 | 50 | 98.0 | 49.0 | 197.0 | 24.9 | 49.7 | 2.0 |
| 14 | 50 | 0 | 0 | 50 | 0 | 0 | - |
| 15 | 50 | 104.0 | 0.0 | 154 | 0.0 | 67.5 | 1.0 |
| 16 | 100 | 140.7 | 70.3 | 311 | 22.6 | 45.2 | 2.0 |
| 17 | 50 | 67.0 | 67.0 | 184 | 36.4 | 36.4 | 1.0 |

[Table 2C]

| No. | Ratio (O/C) of number of oxygen atoms to number of carbon atoms (%) | Overall cell resistance at SOC of 50% (Ω·cm$^2$) | Overall cell resistance at SOC of 30% (Ω·cm$^2$) | Oxidation resistance test | | Water flow rate for water (mm/sec) | BET specific surface area of electrode material (m$^2$/g) |
|---|---|---|---|---|---|---|---|
| | | | | Potential test (V vs Ag/AgCl) | Overall cell resistance at SOC of 50% (Ω·cm$^2$) | | |
| 1 | 2.8 | 0.78 | 0.95 | 1.223 | 0.72 | 1.1 | 2.3 |
| 2 | 2.4 | 0.79 | 0.92 | 1.218 | 0.74 | 1.2 | 2.1 |
| 3 | 2.2 | 0.78 | 0.95 | 1.230 | 0.69 | 1.1 | 2.3 |
| 4 | 2.0 | 0.84 | 1.02 | 1.232 | 0.72 | 1.6 | 1.9 |
| 5 | 2.6 | 0.86 | 1.13 | 1.211 | 0.70 | 1.0 | 1.8 |
| 6 | 2.8 | 0.88 | 1.06 | 1.229 | 0.74 | 1.3 | 1.9 |
| 7 | 2.9 | 0.79 | 0.96 | 1.231 | 0.71 | 1.5 | 2.3 |
| 8 | 2.4 | 0.83 | 1.00 | 1.233 | 0.71 | 1.0 | 2.2 |
| 9 | 2.7 | 0.72 | 0.87 | 1.209 | 0.82 | 1.1 | 3.4 |
| 10 | 2.4 | 0.77 | 0.95 | 1.233 | Evaluation was impossible | 1.2 | 2.3 |
| 11 | 2.2 | 0.75 | 0.90 | 1.232 | Evaluation was impossible | 1.1 | 2.2 |
| 12 | 2.6 | 0.85 | 1.12 | 1.228 | Evaluation was impossible | 1 | 1.5 |
| 13 | 5.6 | 0.75 | 0.93 | 1.021 | 1.62 | 1.8 | 6.2 |
| 14 | 4.4 | 0.90 | 1.33 | 0.634 | 2.01 | 1.5 | 5.5 |
| 15 | 0.4 | 1.05 | 1.82 | 1.247 | 1.00 | 0.6 | 0.1 |
| 16 | 6.1 | 0.72 | 0.94 | 0.639 | 1.54 | 1.1 | 6.6 |

(continued)

| No. | Ratio (O/C) of number of oxygen atoms to number of carbon atoms (%) | Overall cell resistance at SOC of 50% ($\Omega \cdot cm^2$) | Overall cell resistance at SOC of 30% ($\Omega \cdot cm^2$) | Oxidation resistance test | | Water flow rate for water (mm/sec) | BET specific surface area of electrode material ($m^2/g$) |
|---|---|---|---|---|---|---|---|
| | | | | Potential test (V vs Ag/AgCl) | Overall cell resistance at SOC of 50% ($\Omega \cdot cm^2$) | | |
| 17 | 2.4 | 0.90 | 1.38 | 1.005 | 1.71 | 1.1 | 4.9 |

[Table 2D]

| No. | Surface area by mercury press-in method | | |
|---|---|---|---|
| | Total surface area ($m^2/g$) | Surface area Å having pore diameter of 0.1 to 10 $\mu$m ($m^2/g$) | Ratio of surface area A to total surface area (%) |
| 1 | 2.4 | 1.6 | 66.7 |
| 2 | 2.6 | 1.8 | 69.2 |
| 3 | 2.2 | 1.6 | 72.7 |
| 4 | 1.4 | 0.8 | 57.1 |
| 5 | 1.4 | 0.9 | 64.3 |
| 6 | 2.5 | 1.4 | 56.0 |
| 7 | 2.1 | 1.3 | 61.9 |
| 8 | 2.8 | 1.8 | 64.3 |
| 9 | 3.2 | 2.7 | 84.4 |
| 10 | 2.7 | 1.7 | 63.0 |
| 11 | 1.4 | 0.8 | 57.1 |
| 12 | 1.6 | 0.9 | 56.3 |
| 13 | 15.2 | 1.6 | 10.5 |
| 14 | 0.5 | 0.0 | 0.0 |
| 15 | 0.2 | 0.2 | 100.0 |
| 16 | 22.1 | 2.4 | 10.9 |
| 17 | 4.5 | 0.7 | 15.6 |

In Nos. 1 to 9, electrode materials that satisfy the requirements of the present invention and that each have excellent oxidation resistance while maintaining low resistance were obtained. In particular, these electrode materials each maintained almost the same resistance value as the initial resistance value even when the weight of the electrode material was reduced by about half due to the charging liquid, and thus were proved to have very excellent durability (see the cells for overall cell resistance at SOC of 50%). Furthermore, in these examples, since the surface area A having a pore diameter of 0.1 to 10 $\mu$m satisfies the preferable requirements of the present invention, the resistance value at a state of charge of 30%, which is a low charging depth, is also significantly reduced (see the cells for overall cell resistance at SOC of 30%). Therefore, it is found that the surface area having a pore diameter of 0.1 to 10 $\mu$m contributes to the reduction of the above resistance.

On the other hand, Nos. 10 to 17 are comparative examples using carbon paper that is a fiber structure that does not satisfy the requirements of the present invention. When Nos. 10 to 12 were respectively compared with Nos. 2, 3, and 5 in each of which the type of the carbon fibers was the same but only the type of the fiber structure was different (spunlace non-woven fabric was used), the values of the cell resistance and the oxidation resistance test (potential test) of both were similar. However, when the oxidation resistance test (overall cell resistance at SOC of 50%) was performed under the weight reduction of the electrode material, in Nos. 10 to 12, the shape of the electrode material was not able to be maintained, and charging/discharging was not able to be performed even when assembled to a cell (evaluation was impossible). It is inferred that this is because the structure form was broken due to compression during cell assembly and the electrolyte stopped flowing.

In No. 13, since the carbon material (Lc = 1.5 nm) having low crystallinity (Lc) was used, the cell resistance was low, but the oxidation resistance (potential test) was significantly reduced. In addition, the overall cell resistance at SOC of 50% was also significantly increased in the oxidation resistance test under the weight reduction of the electrode material.

No. 14 is an example that simulates Patent Literature 3 and in which both graphite particles and a carbon material were not used, and, in No. 14, the cell resistance was higher and the oxidation resistance (potential test, overall cell resistance at SOC of 50%) was significantly reduced as compared with the examples of the present invention.

No. 15 is an example in which graphite particles were not used and only a high-crystalline carbon material was used, and, in No. 15, the oxidation resistance (potential test) was excellent, but the cell resistance was high. In the oxidation resistance test under the weight reduction of the electrode material, the overall cell resistance at SOC of 50% was increased as compared with the examples of present invention.

In No. 16, since a carbon material (Lc = 1.5 nm) that satisfies Lc(C)/Lc(A) but has low crystallinity (Lc) was used, the cell resistance was low, but the oxidation resistance (potential test) was significantly reduced. In addition, the overall cell resistance at SOC of 50% was also significantly increased in the oxidation resistance test under the weight reduction of the electrode material.

In No. 17, since the graphite particles G which satisfy Lc(C) and Lc(C)/Lc(A) but have Lc(B) of less than 35 nm were used, the cell resistance was high, and the oxidation resistance (potential test) was also reduced. In addition, the overall cell resistance at SOC of 50% was also significantly increased in the oxidation resistance test under the weight reduction of the electrode material. Furthermore, the ratio of the surface area A to the total surface area was lower than the preferable requirement of the present invention, and the proportion of the surface area that did not contribute to the reaction was increased, so that the overall cell resistance at SOC of 30% was also increased.

INDUSTRIAL APPLICABILITY

According to the present invention, a carbon electrode material that has excellent oxidation resistance and that has low resistance and long life can be provided. Therefore, the carbon electrode material is particularly useful as an electrode material for a redox flow battery in which a Mn-Ti-based electrolyte is used. The carbon electrode material of the present invention is preferably used for flow-type and non-flow type redox flow batteries, a redox flow battery composited with lithium, a capacitor, and a fuel-cell system, etc.

DESCRIPTION OF THE REFERENCE CHARACTERS

| | |
|---|---|
| 1 | current collecting plate |
| 2 | spacer |
| 3 | ion-exchange membrane |
| 4a, 4b | liquid flow path |
| 5 | electrode material |
| 6 | positive electrode electrolyte tank |
| 7 | negative electrode electrolyte tank |
| 8, 9 | pump |
| 10 | liquid inflow port |
| 11 | liquid outflow port |
| 12, 13 | external flow path |

Claims

1. A carbon electrode material for a redox flow battery, comprising;

carbon fibers (A), graphite particles (B), and a carbon material (C) for binding the carbon fibers (A) and the graphite particles (B), and
the carbon electrode material satisfying the following requirements:

(1) Lc(C) is not less than 10 nm when Lc(C) represents a crystallite size, in a c-axis direction, obtained by X-ray diffraction in the carbon material (C);

(2) Lc(C)/Lc(A) is not less than 1.0 when Lc(A) represents a crystallite size, in the c-axis direction, obtained by X-ray diffraction in the carbon fibers (A);

(3) an average curvature is not less than 1R and an average fiber diameter is 5 to 15 $\mu$m in a structure of the carbon fibers (A); and

(4) a number of oxygen atoms bound to a surface of the carbon electrode material is not less than 1.0% of a total number of carbon atoms on the surface of the carbon electrode material.

2. The carbon electrode material according to claim 1, wherein when a surface area obtained by a mercury press-in method is measured, a surface area A having a pore diameter of 0.1 to 10 $\mu$m is 0.3 to 3.5 m$^2$/g, and a ratio of the surface area A to a total surface area is not less than 50%.

3. The carbon electrode material according to claim 1 or 2, wherein each of mass content ratios of the graphite particles (B) and the carbon material (C) to a total content of the carbon fibers (A), the graphite particles (B), and the carbon material (C) is not less than 20%, and a mass ratio of the carbon material (C) to the graphite particles (B) is 0.2 to 3.0.

4. The carbon electrode material according to any one of claims 1 to 3, wherein the Lc(A) is 1 to 10 nm.

5. The carbon electrode material according to any one of claims 1 to 4, wherein a BET specific surface area obtained from a nitrogen adsorption amount is 1.0 to 8 m$^2$/g.

6. The carbon electrode material according to any one of claims 1 to 5, wherein the graphite particles (B) include at least one type selected from the group consisting of scaly graphite, laminate graphite, spheroidal graphite, and expanded graphite.

7. The carbon electrode material according to any one of claims 1 to 6, wherein a water flow rate is not less than 0.5 mm/sec when a water droplet is dropped.

8. A redox flow battery comprising the carbon electrode material according to any one of claims 1 to 7.

9. A manganese/titanium-based redox flow battery in which the carbon electrode material according to any one of claims 1 to 7 is used.

[Fig. 1]

[Fig. 2]

[Fig.3]

carbon fibers (A)

a carbon material (C)

graphite particles (B) and
a carbon material (C)

[Fig.4]

carbon fibers (A)

a carbon material (C)

[Fig.5]

carbon fibers (A)

graphite particles (B) and
a carbon material (C)

a carbon material (C)

<table>
<tr><td colspan="2">**INTERNATIONAL SEARCH REPORT**</td><td>International application No.<br>PCT/JP2020/009753</td></tr>
</table>

**A. CLASSIFICATION OF SUBJECT MATTER**

H01M 4/96(2006.01)i; C01B 32/00(2017.01)i; H01M 8/18(2006.01)i
FI: H01M8/18; H01M4/96 B; C01B32/00

According to International Patent Classification (IPC) or to both national classification and IPC

**B. FIELDS SEARCHED**

Minimum documentation searched (classification system followed by classification symbols)
H01M4/96; C01B32/00; H01M8/18

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-33758 A (TOYOBO CO., LTD.) 09.02.2017 (2017-02-09) claims 1-2, paragraphs [0015], [0018], [0077] | 1-9 |
| A | JP 59-101776 A (TOYOBO BOSEKI KABUSHIKI KAISHA) 12.06.1984 (1984-06-12) claims, page 2, lower left column, line 5 to page 3, upper right column, line 17, page 4, upper left column, line 13 to upper right column, line 6, page 4, lower left column, line 6 to page 5, upper left column, line 19 | 1-9 |
| P, A | WO 2019/049756 A1 (TOYOBO CO., LTD.) 14.03.2019 (2019-03-14) claims 5, 11, paragraphs [0017], [0215]-[0218], [0240]-[0242], tables 2, 4 | 1-9 |
| P, A | WO 2019/049755 A1 (TOYOBO CO., LTD.) 14.03.2019 (2019-03-14) claims 5, 9, paragraphs [0015], [0215]-[0218], [0241]-[0244], tables 2, 4 | 1-9 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 May 2020 (18.05.2020) | 26 May 2020 (26.05.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/009753

| Patent Documents referred in the Report | Publication Date | Patent Family | Publication Date |
|---|---|---|---|
| JP 2017-33758 A | 09 Feb. 2017 | (Family: none) | |
| JP 59-101776 A | 12 Jun. 1984 | (Family: none) | |
| WO 2019/049756 A1 | 14 Mar. 2019 | TW 201918454 A | |
| WO 2019/049755 A1 | 14 Mar. 2019 | (Family: none) | |

Form PCT/ISA/210 (patent family annex) (January 2015)

**EP 3 940 829 A1**

**Patent documents cited in the description**

- JP S60232669 A
- JP H5234612 A
- JP 2000357520 A
- JP 2017033758 A
- JP 2012204135 A
- JP 63200467 A
- JP 2019045662 A